# EUROPEAN PATENT SPECIFICATION

(11) **EP 1 450 252 B1**
(45) Date of publication and mention of the grant of the patent: **18.08.2010**
(21) Application number: 01274843.0
(22) Date of filing: 29.11.2001
(51) Int. Cl.: G06F 9/30, G06F 21/00

(54) **CENTRAL PROCESSING UNIT, METHOD, AND OPERATION PROGRAM FOR MANAGING A PLURALITY OF OPERATION MODES**
ZENTRALE VERARBEITUNGSEINRICHTUNG, VERFAHREN, UND BETRIEBSPROGRAMM ZUR VERWALTUNG VON MEHREREN BETRIEBSMODEN
DISPOSITIF CENTRAL DE TRAITEMENT, PROCEDE, ET PROGRAMME DE FONCTIONNEMENT POUR COMMANDER UN PLURALITE DE MODES DE FONCTIONNEMENT

(43) Date of publication of application: 25.08.2004
(73) Proprietor: FUJITSU LIMITED, Kawasaki-shi, Kanagawa 211-8588 (JP)
(72) Inventor: KAMADA, Jun, FUJITSU LIMITED, Kawasaki-shi, Kanagawa 211-8588 (JP); KOTANI, Seigo, FUJITSU LIMITED, Kawasaki-shi, Kanagawa 211-8588 (JP)
(74) Representative: Hitching, Peter Matthew
(86) International application number: PCT/JP2001/010446
(87) International publication number: WO 2003/046715

(56) References cited:
- WO-A-00/67115
- GB-A- 2 136 998
- JP-A- 2 231 634
- JP-A- 7 182 155
- US-A- 5 652 887
- "CRYPTOGRAPHIC MICROCODE LOADING CONTROLLER FOR SECURE FUNCTION" IBM TECHNICAL DISCLOSURE BULLETIN, IBM CORP. NEW YORK, US, vol. 34, no. 4B, 1 September 1991 (1991-09-01), pages 34-36, XP000189547 ISSN: 0018-8689
- EDEL T R ET AL: "DYNAMIC INSTRUCTION SET DEFINITION" IBM TECHNICAL DISCLOSURE BULLETIN, IBM CORP. NEW YORK, US, vol. 16, no. 6, November 1973 (1973-11), pages 1929-1930, XP001014626 ISSN: 0018-8689
- BIRD R.P.: 'A dynamically microprogrammable machine as a variable function resource in a local area network' SYSTEMS ARCHITECTURE, THE INTERNATIONAL COMPUTING SYMPOSIUM 1981, pages 37 - 45, XP002909372
- MASATAKA KOTANI, TAKASHI MORIHARA, NAOYA TORII: 'Tokusyu: kenkyu kaihatsu saizensen internet security' FUJITSU vol. 52, no. 4, 13 July 2001, pages 329 - 337, XP002909373

## Description

### TECHNICAL FIELD

The present invention relates to a central processing unit and an operation program for realizing a security function, for example. Particularly, the invention relates to the central processing unit and the operation program, which can maintain security and simultaneously improving extensibility.

### BACKGROUND ART

In recent years, as E-commerce on the Internet is being intensified, more advanced security is demanded. Calculators which are used for the E-commerce, therefore, require security functions such as authentication, encryption/decryption, creating/verification of digital signature. Ideally, the security functions are desirably realized by a security system composed of a plurality of computers having independent security functions.

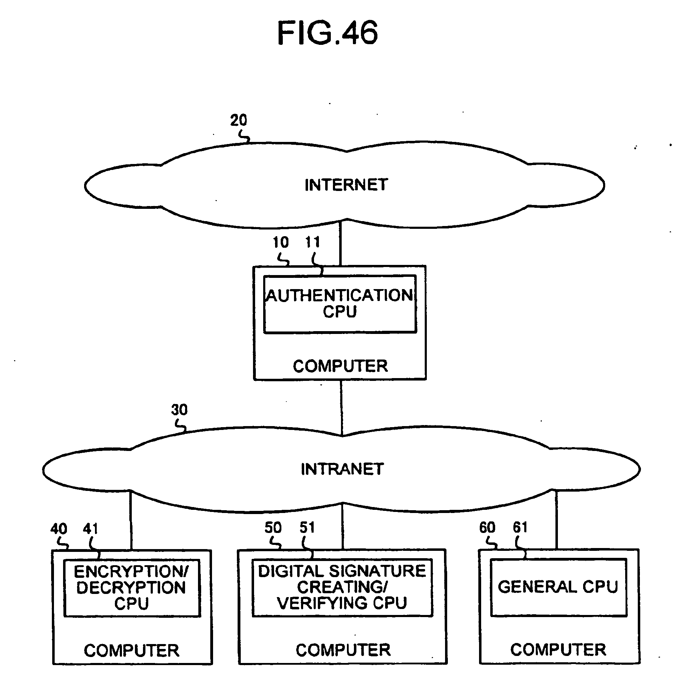

Fig. 46 is a block diagram illustrating a constitution of the conventional security system. In this drawing, a computer 10 is connected to the Internet 20 and an intranet 30, and an authentication CPU (central processing unit) 11 realizes authentication as the security function. The authentication CPU 11 is constituted so as to be capable of using only a command group for the authentication in order to strengthen the security.

A computer 40 is connected to the intranet 30, and an encryption/decryption CPU 41 realizes encryption/decryption as the security function. The encryption/decryption CPU 41 is also constituted so as to be capable of using only a command group, which is specific to the encryption/decryption in order to strengthen the security.

A computer 50 is connected to the intranet 30, and a digital signature creating/verifying CPU 51 realizes creating/verification of digital signature as the security function. The digital signature creating/verifying CPU 51 is also constituted so as to be capable of using only a command group, which is specific to the creating/verification of digital signature in order to strengthen the security.

A computer 60 is connected to the intranet 30, and a general CPU 61 realizes a general function other than the security functions. The general CPU 61 is constituted so as to be capable of using only a command group, which is specific to a general purpose. In the conventional security system, the respective computers realize the security functions.

In the above-mentioned conventional security system, since the command groups, which can be used by the respective computers in order to strengthen the security are set in a fixed manner, the system has less extensibility.

Particularly in this day and age that the security technique is being advanced remarkably, since old computers should be replaced by computers into which new command groups are installed every time when the latest security technique is developed. For this reason, the cost is high. The present invention is devised in order to solve the above problems, and its object is to provide the central processing unit and the operation program, which can improve extensibility and reduce the cost while the security is being maintained.

WO 00/67115A discloses a central processing unit and a method of operation thereof as detailed in the preamble to the independent claims herein.

US-A-5,652,887 discloses a system for enabling expanded instruction sets, applications, data and parameters to be downloaded from one processor to another so that processors ordinarily intended for specific tasks can run other tasks without having an expanded instruction set and application code specifically developed or always resident. In an exemplary embodiment, four types of extended commands are issued by the system processor to the peripheral processor in which a command table is built to point to interpretable images resident therein.

"Cryptographic microcode loading controller for secure function" IBM Technical Disclosure Bulletin, IBM Corp. New York, US, vol. 34, no. 4B, 1 September 1991 (1991-09-01), pages 34-36 discloses a central processor unit. In particular the document discloses a single-chip microcontroller and a method of operation thereof so as to load microcode in a secure manner. The microcode may be encrypted.

### DISCLOSURE OF THE INVENTION

According to a first aspect of the present invention there is provided a central processing unit comprising: an input unit that inputs a command that can be executed by using a firmware or a logic circuit: a storing unit that stores a plurality of operation modes, each one of the operation modes corresponding to a different set of commands; and a determining unit that determines whether the input command is included or not in the set of commands corresponding to a current operation mode, characterized by further comprising: a resource storing unit that stores a different set of resources required for executing the commands that are available when the each one of the operation modes is set; an access control unit that, when the input command is included in the set of commands corresponding to the current operation mode, determines whether a necessary resource to execute the input command is included or not in an available set of resources corresponding to the current operation mode, and that prohibits access to the necessary resource that is not included in the available set of resources; and an execution unit that, when the necessary resource is included in the available set of resources, executes the input command by using the firmware or the logic circuit in conjunction with the necessary resource.

According to a second aspect of the present invention there is provided a method for managing a plurality of operation modes comprising: inputting a command that can be executed by using a firmware or a logic circuit: and determining whether the input command is included or not in a set of commands corresponding to a current operation mode, where each one of the operation modes corresponds to a different set of commands, characterized by the each one of the operation modes corresponding to a different set of resources required for executing the commands that are available when the each one of the operation modes is set, and further comprising: determining whether a necessary resource to execute the input command is included or not in an available set of resources corresponding to the current operation mode, when the input command is included in the set of commands corresponding to the current operation mode; prohibiting access to the necessary resource that is not included in the available set of resources; and executing the input command by using the firmware or the logic circuit in conjunction with the necessary resource, when the necessary resource is included in the available set of resources.

According to a third aspect of the present invention there is provided a computer-readable recording medium that stores a computer program for managing a plurality of operation modes, the computer program makes a computer execute: inputting a command that can be executed by using a firmware or a logic circuit; and determining whether the input command is included or not in a set of commands corresponding to a current operation mode, where each one of the operation modes corresponds to a different set of commands, characterized by the each one of the operation modes corresponding to a different set of resources required for executing the commands that are available when the each one of the operation modes is set, and further comprising: determining whether a necessary resource to execute the input command is included or not in an available set of resources corresponding to the current operation mode, when the input command is included in the set of commands corresponding to the current operation mode; prohibiting access to the necessary resource that is not included in the available set of resources; and executing the input command by using the firmware or the logic circuit in conjunction with the necessary resource, when the necessary resource is included in the available set of resources.

### BRIEF DESCRIPTION OF THE DRAWINGS

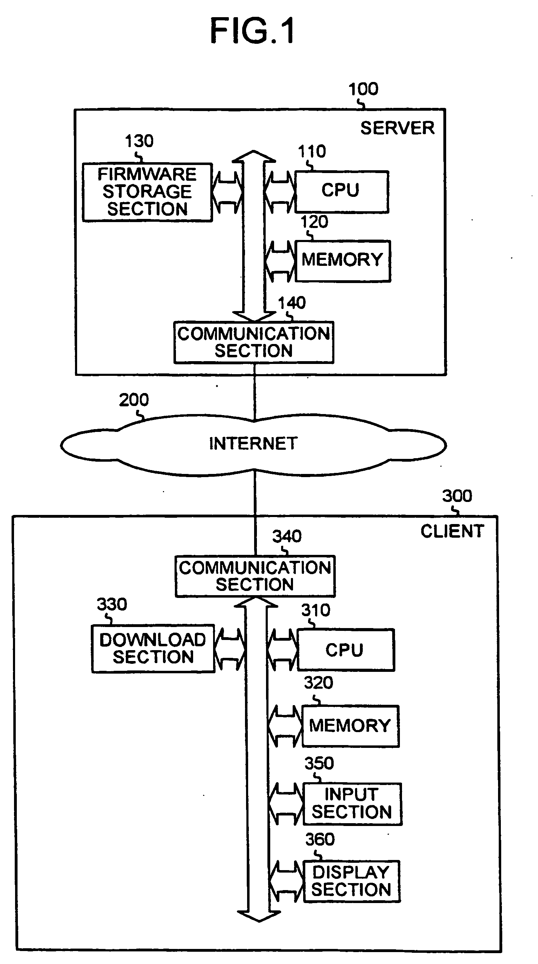

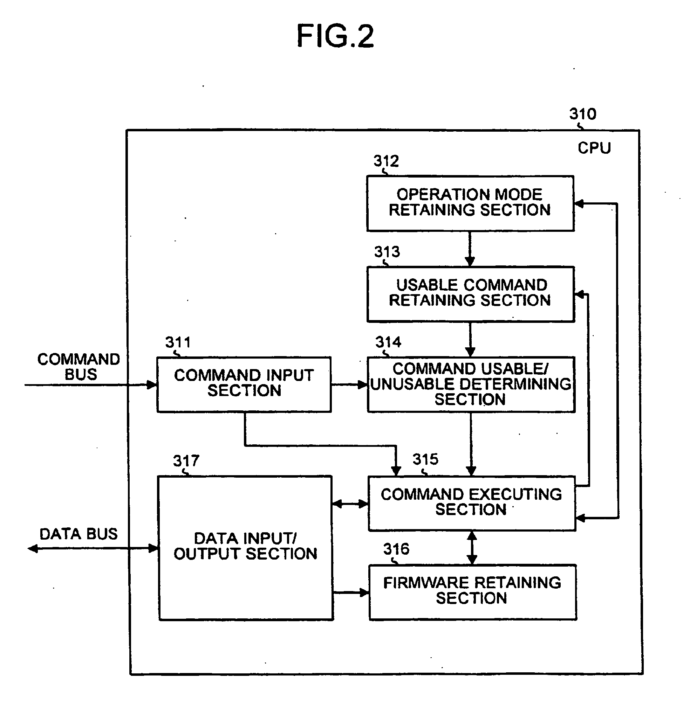

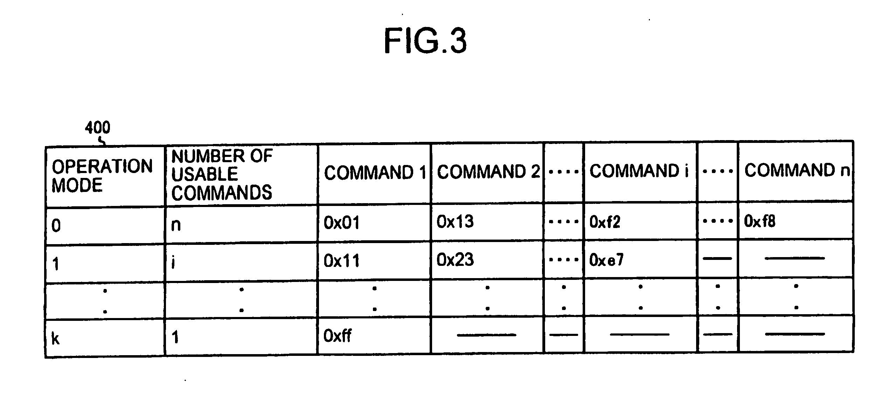

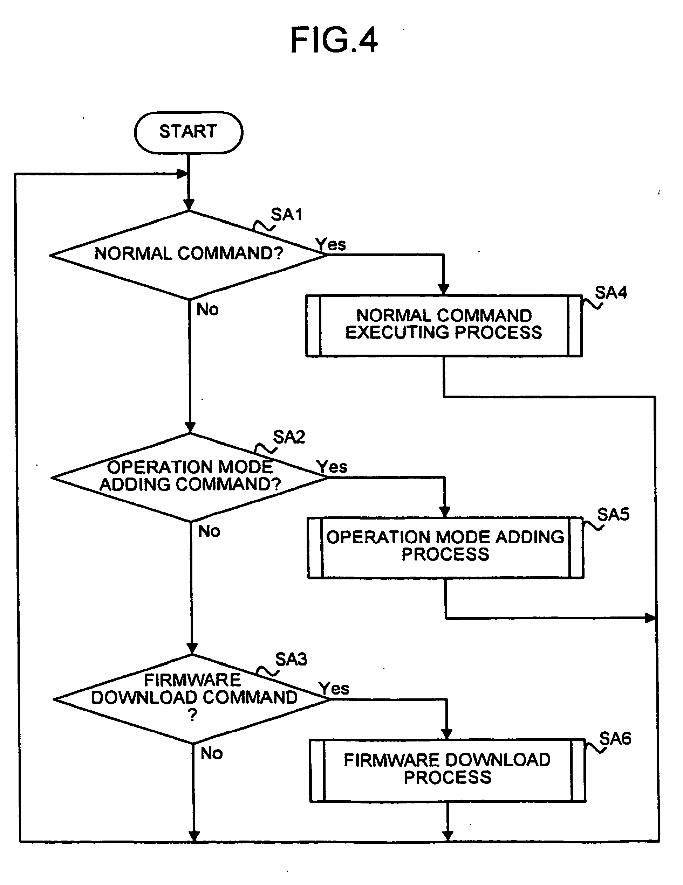

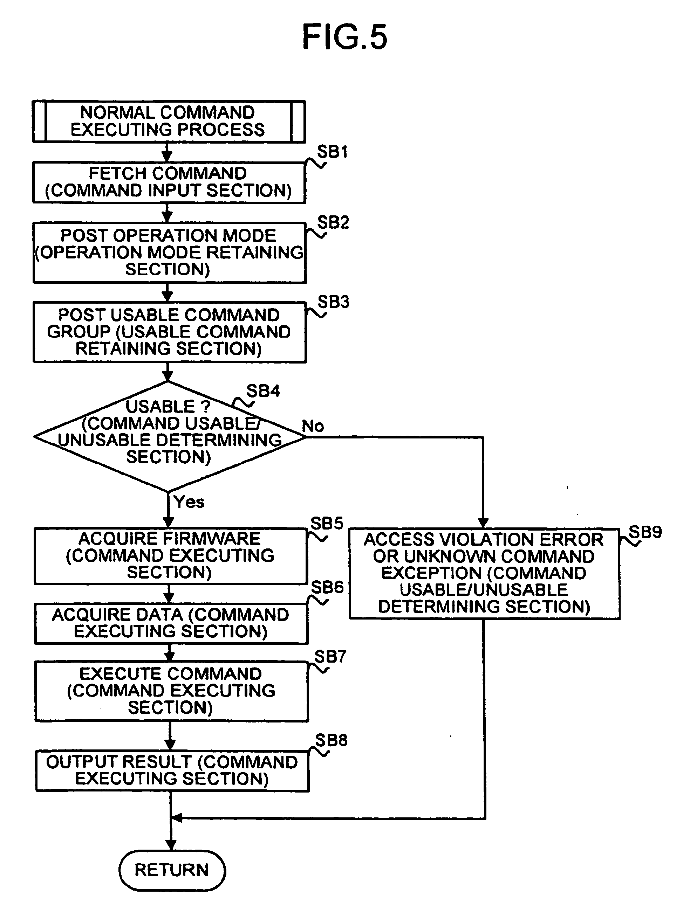

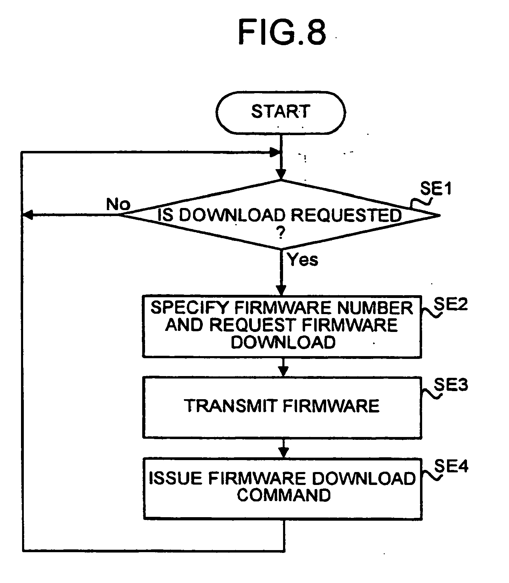

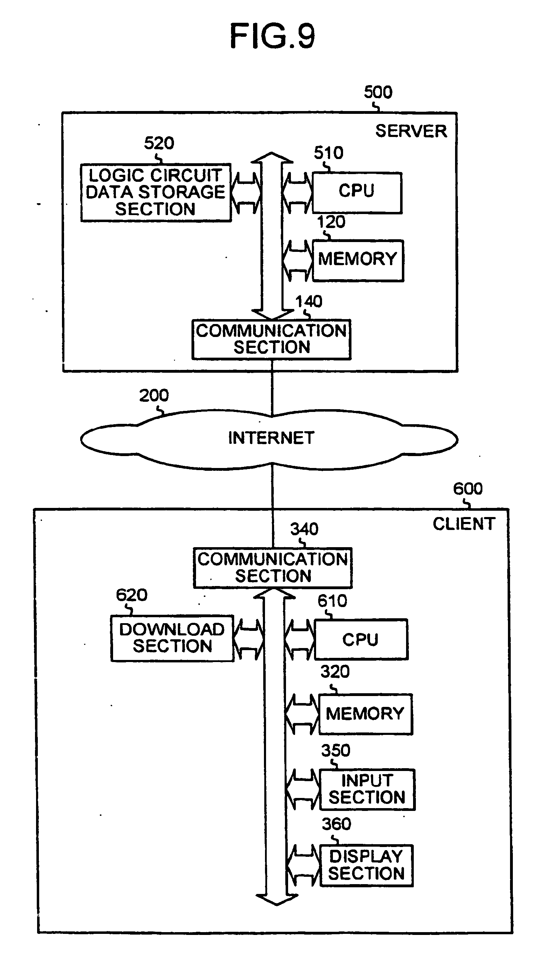

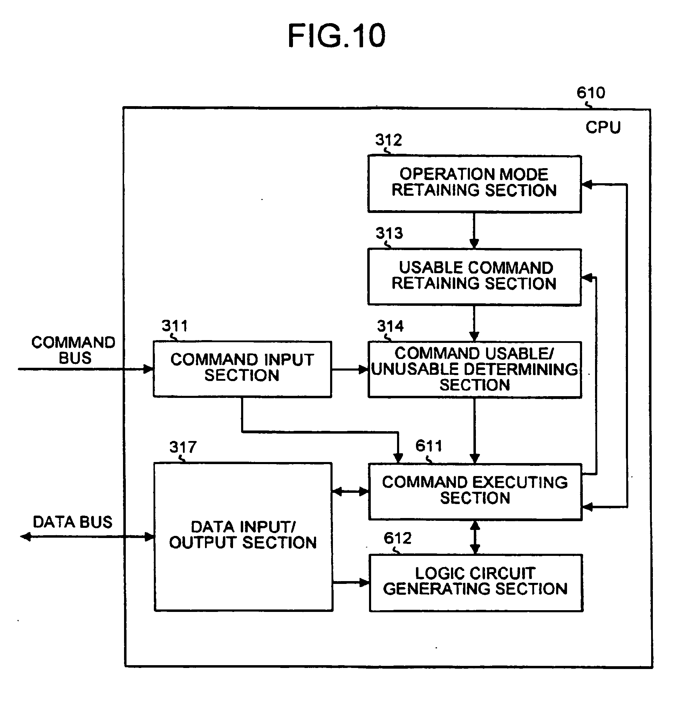

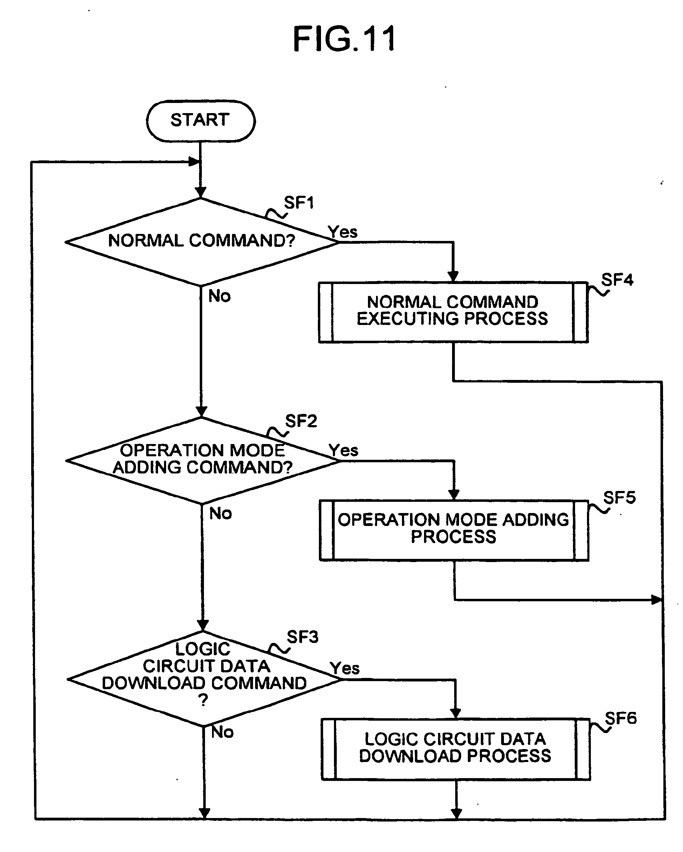

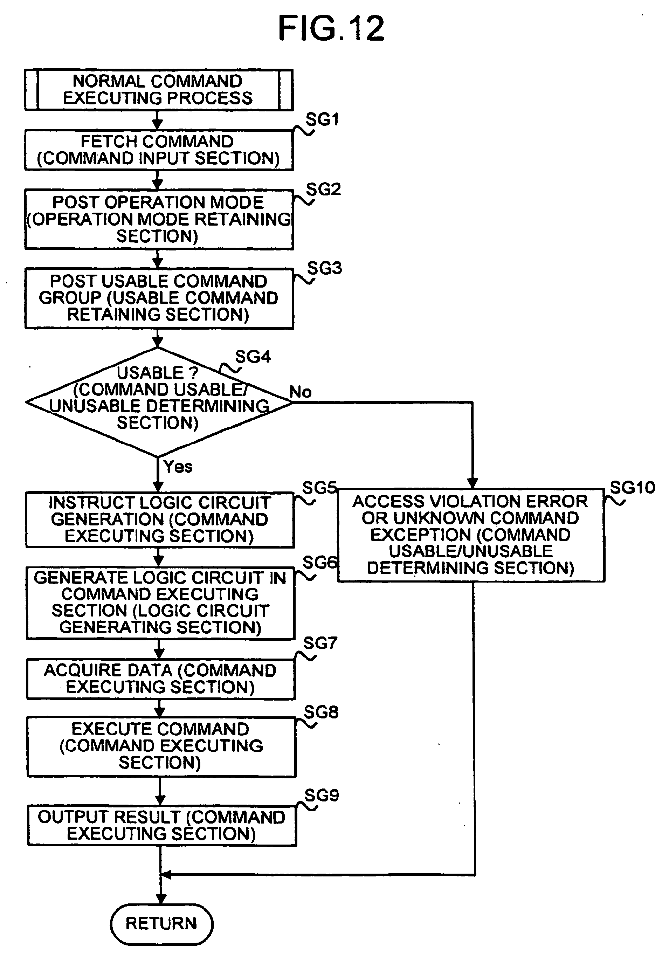

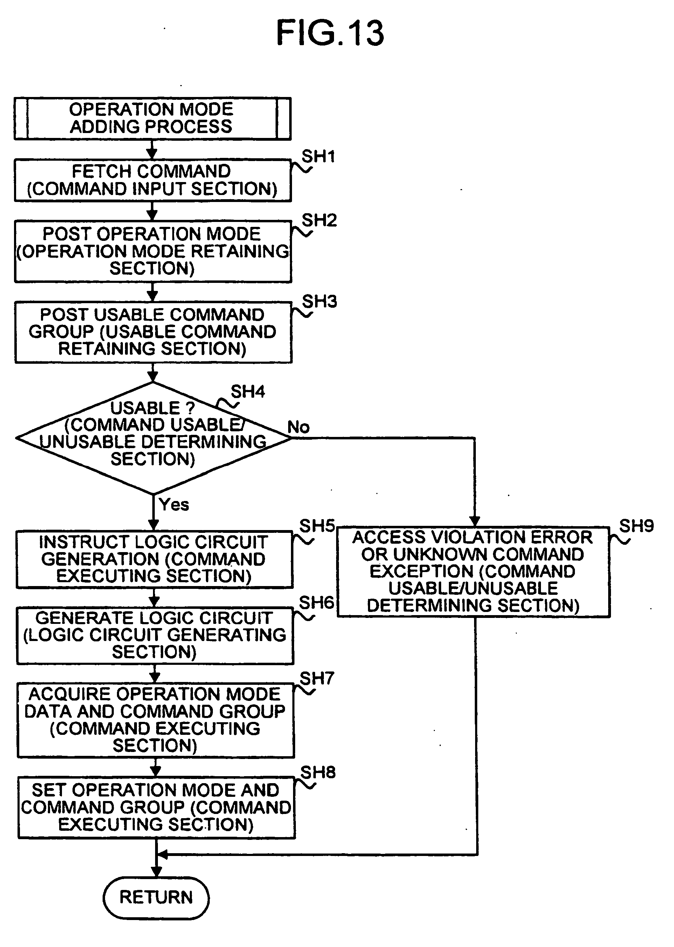

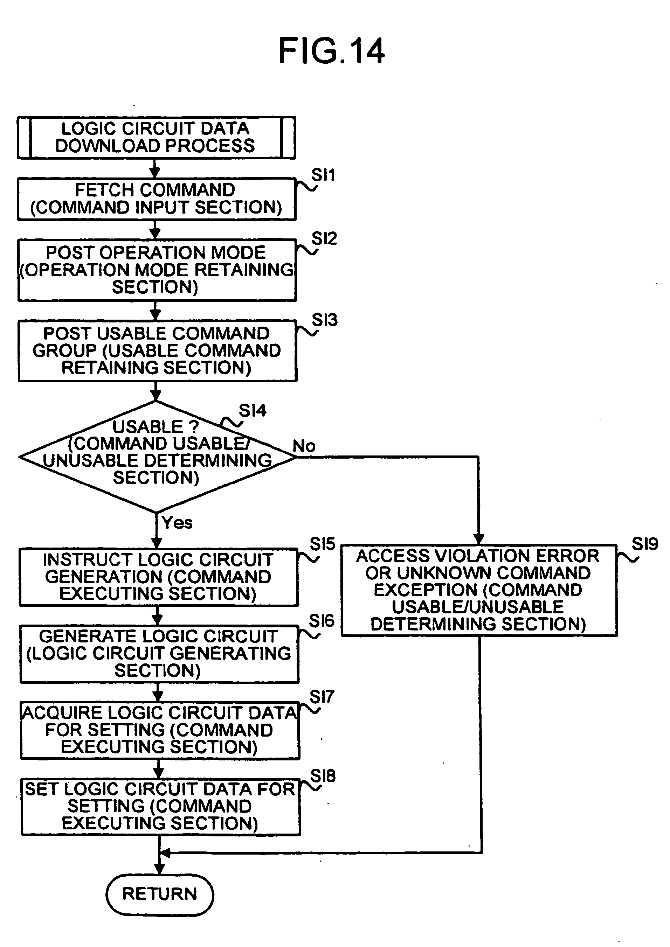

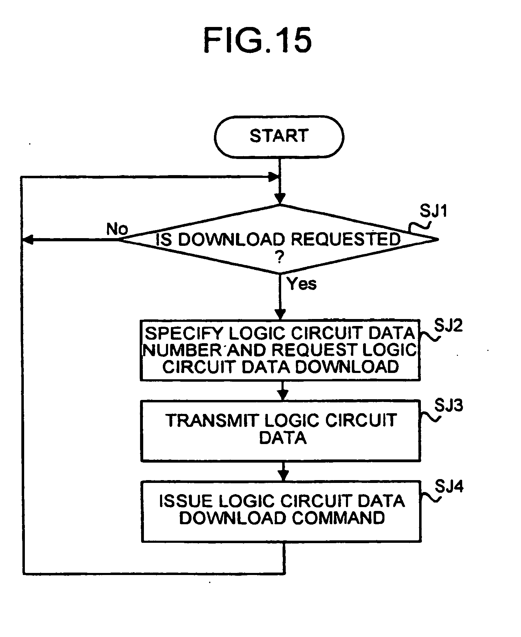

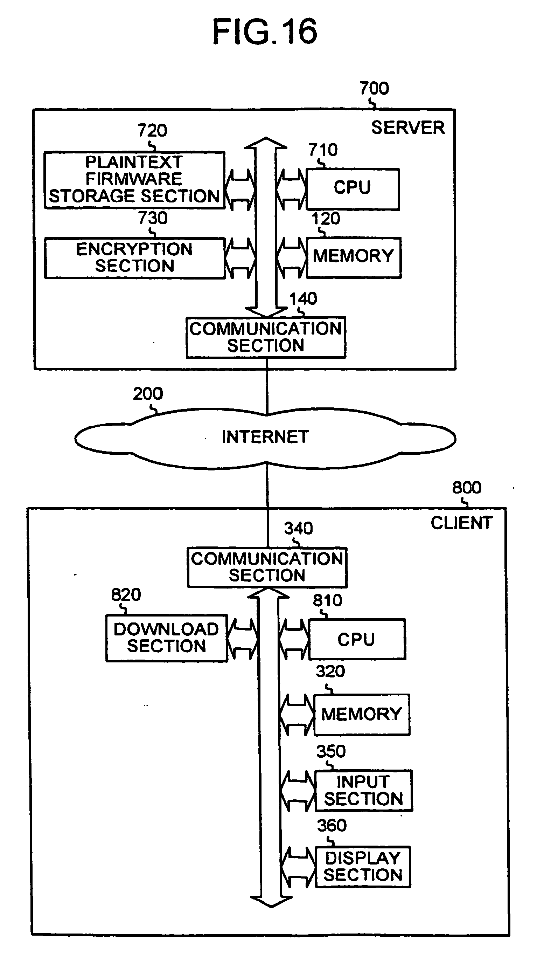

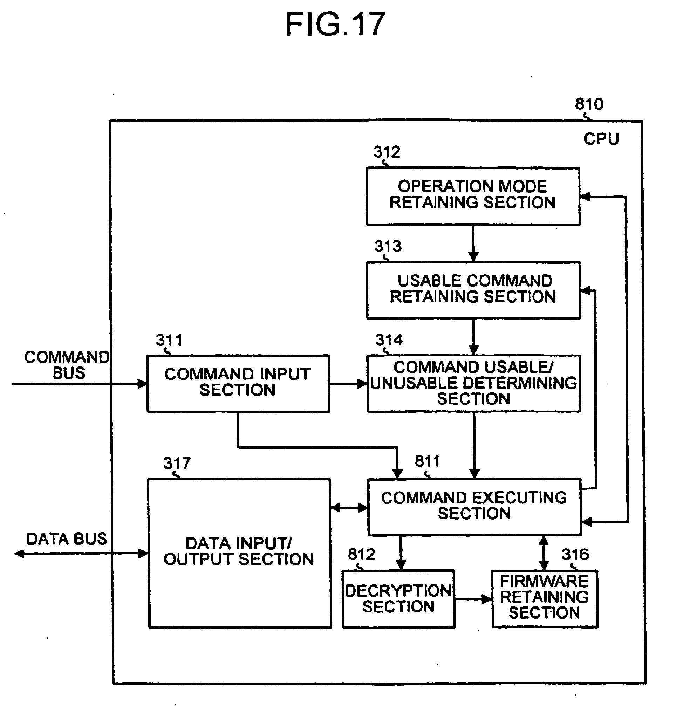

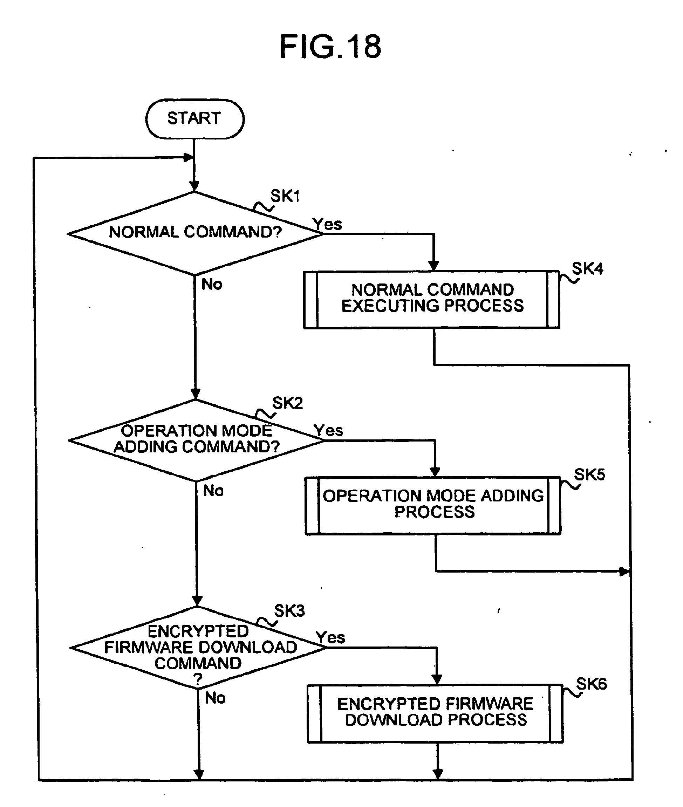

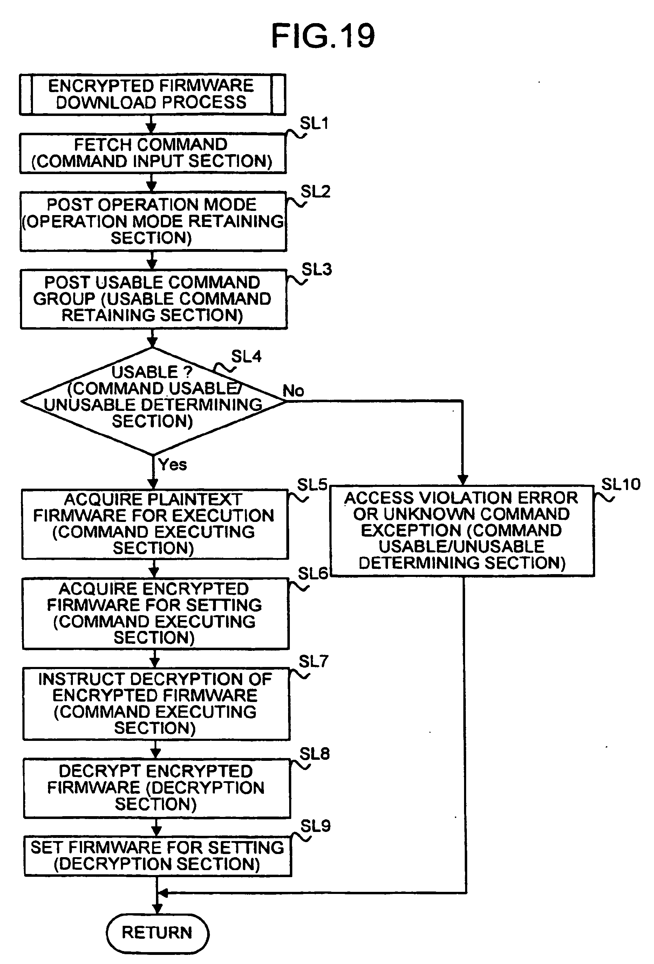

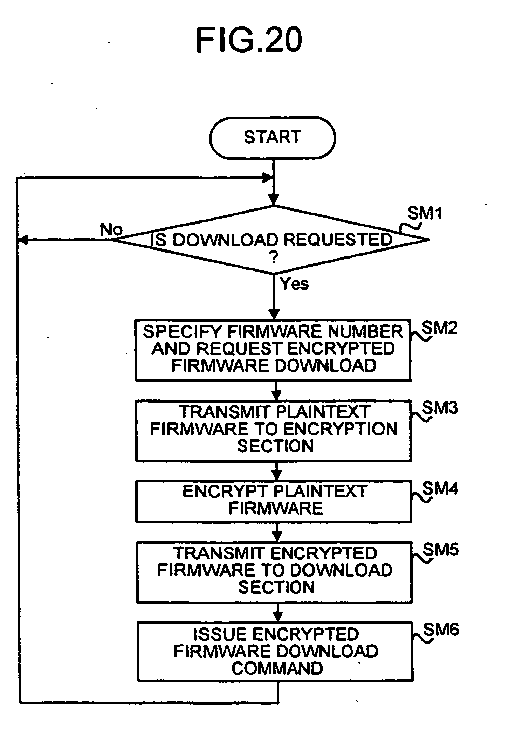

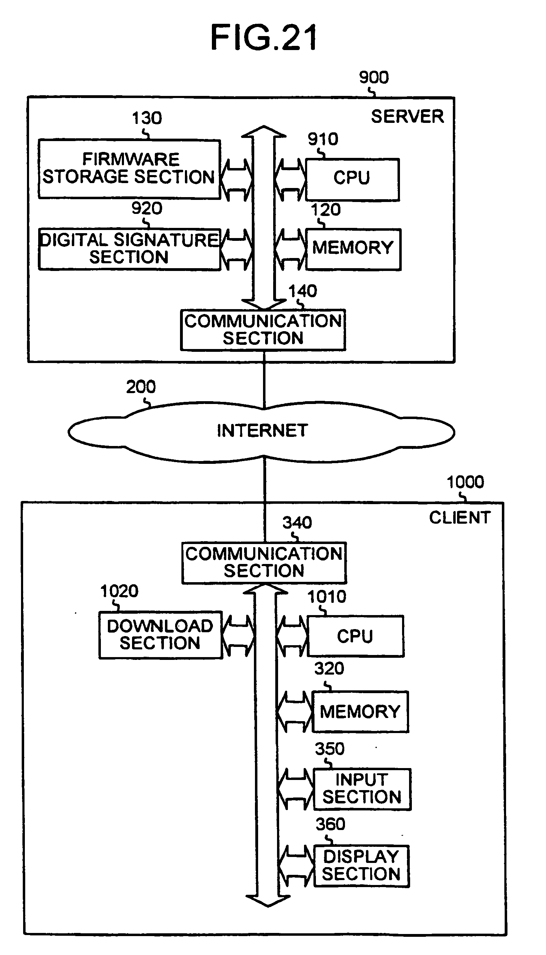

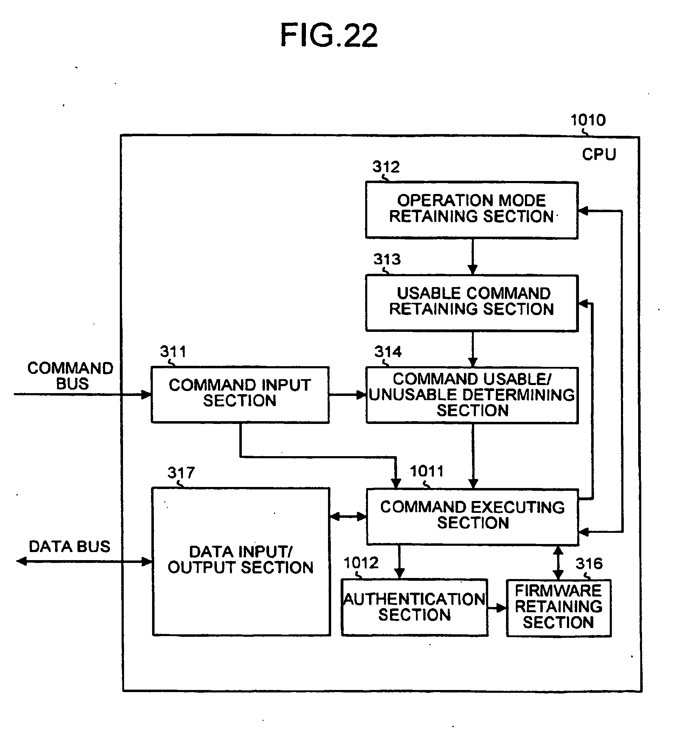

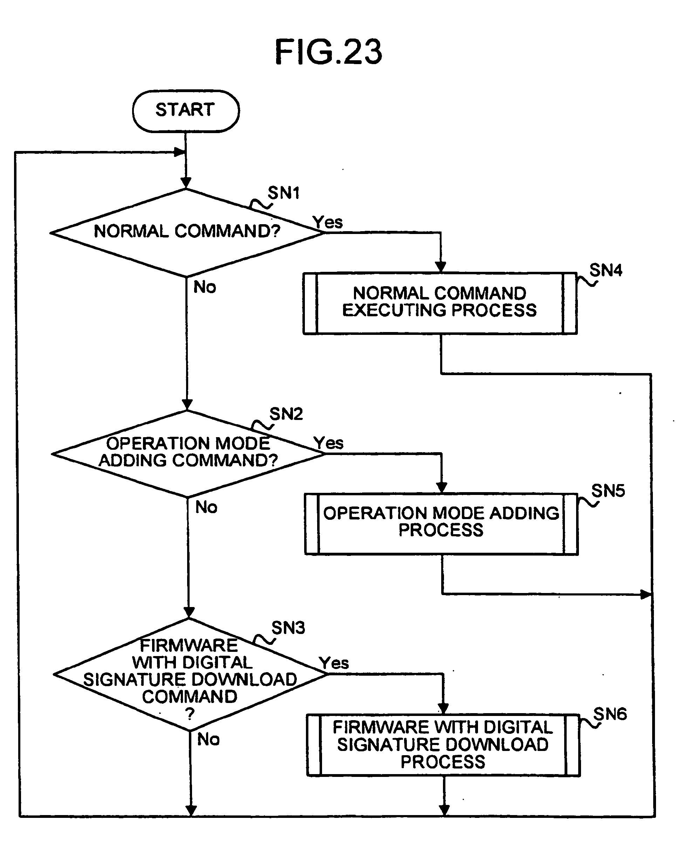

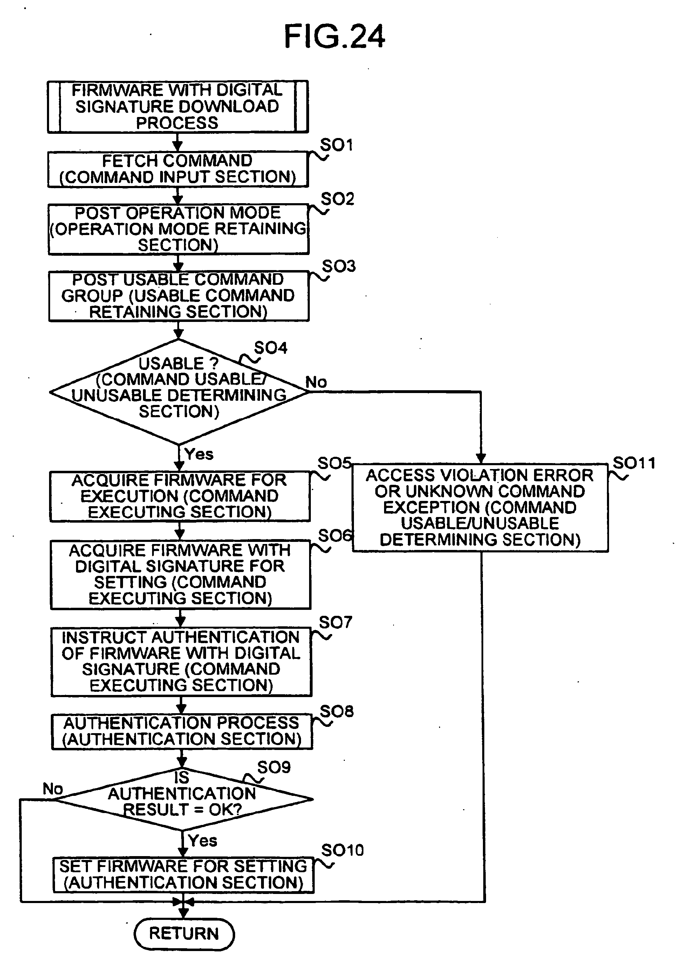

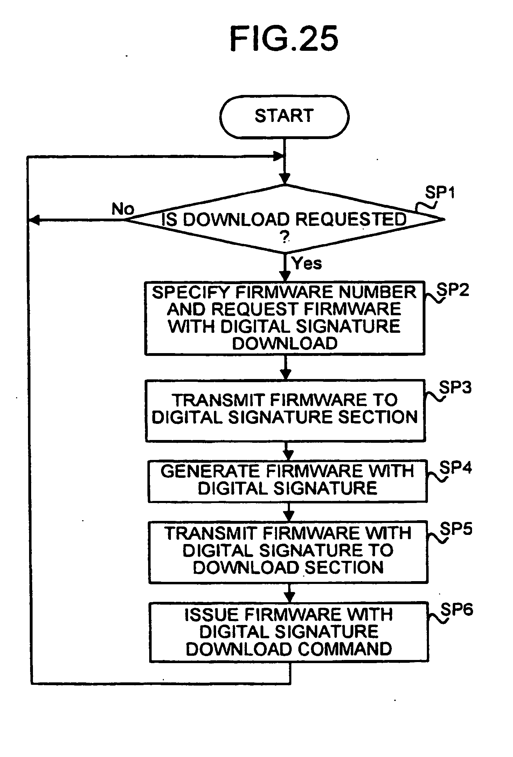

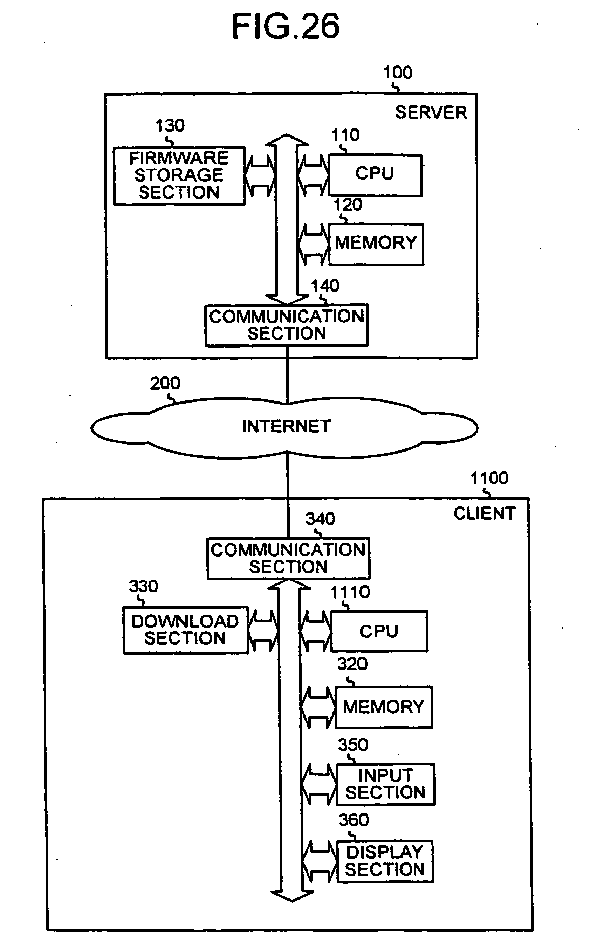

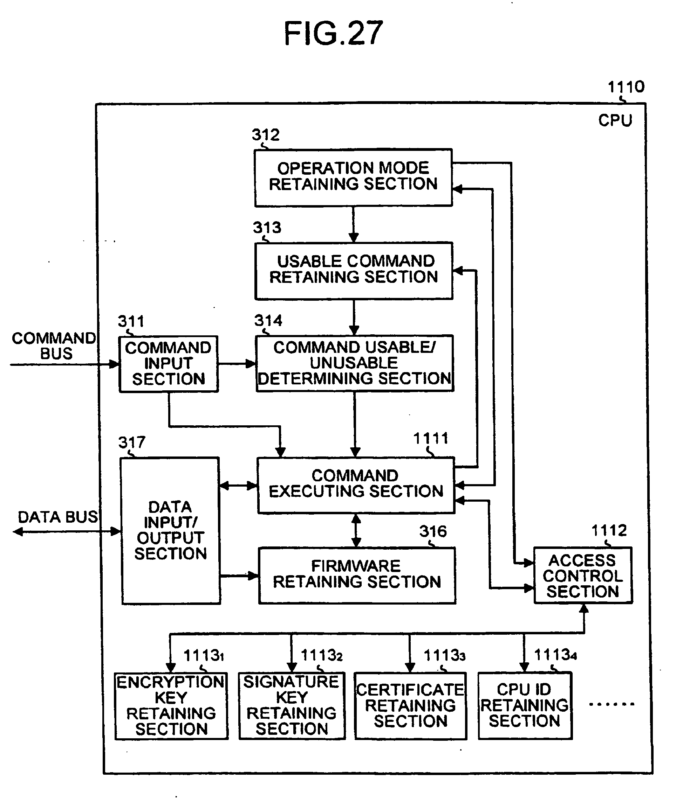

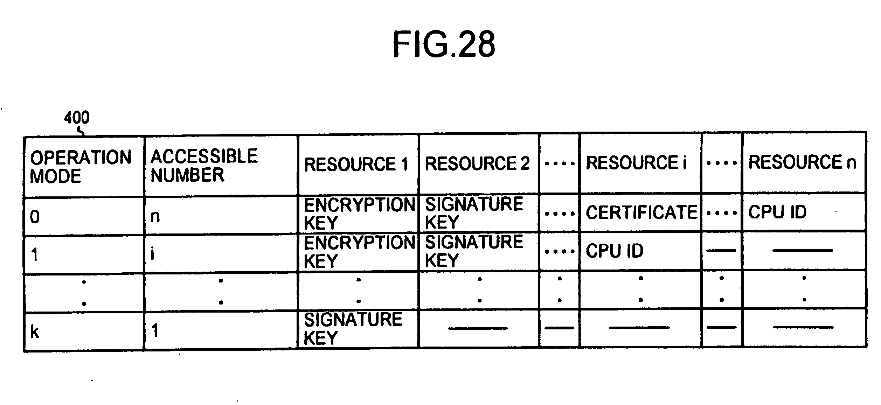

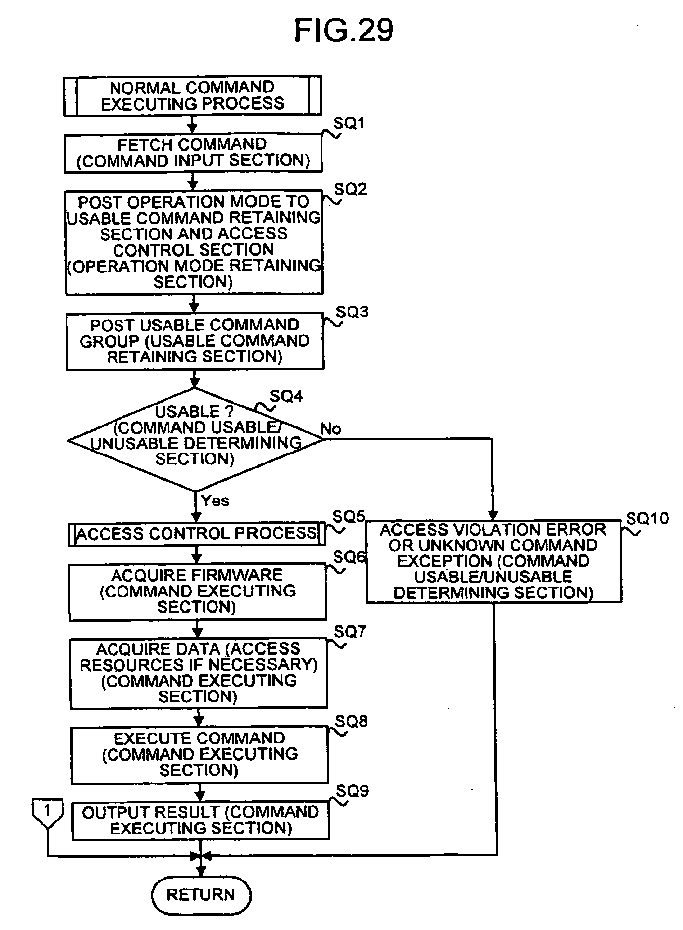

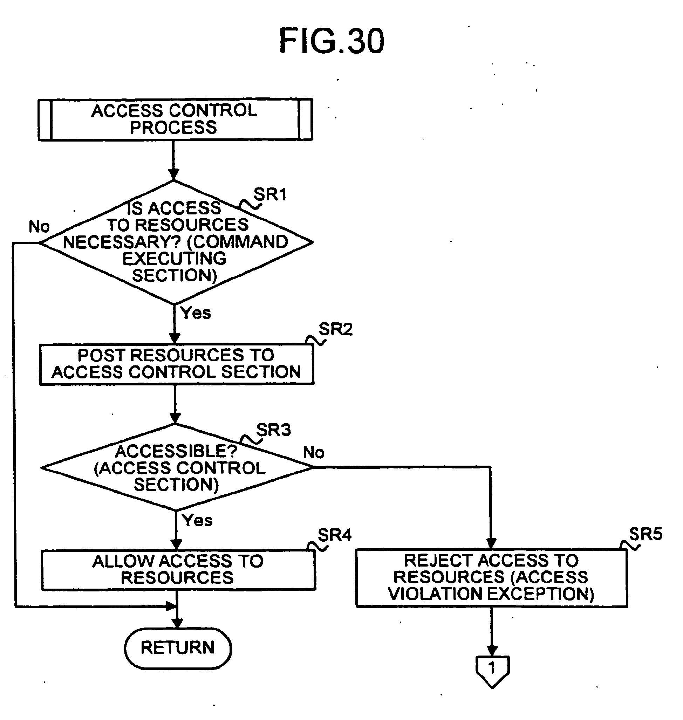

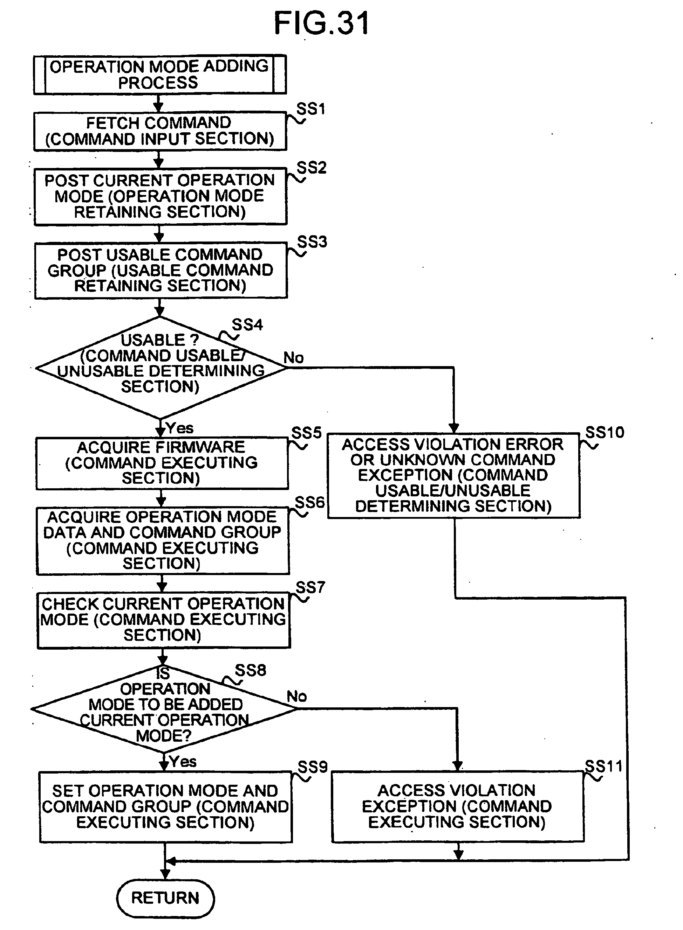

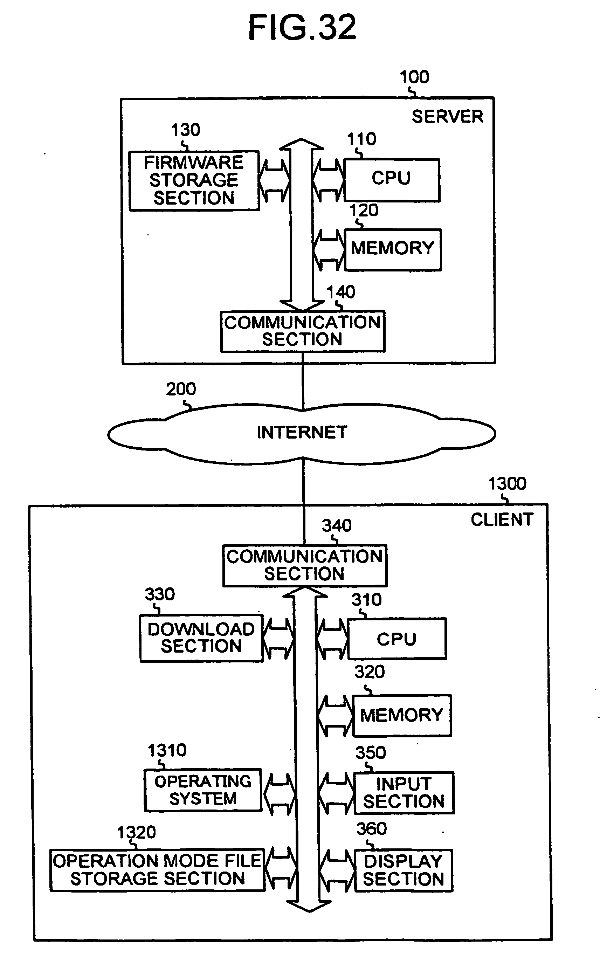

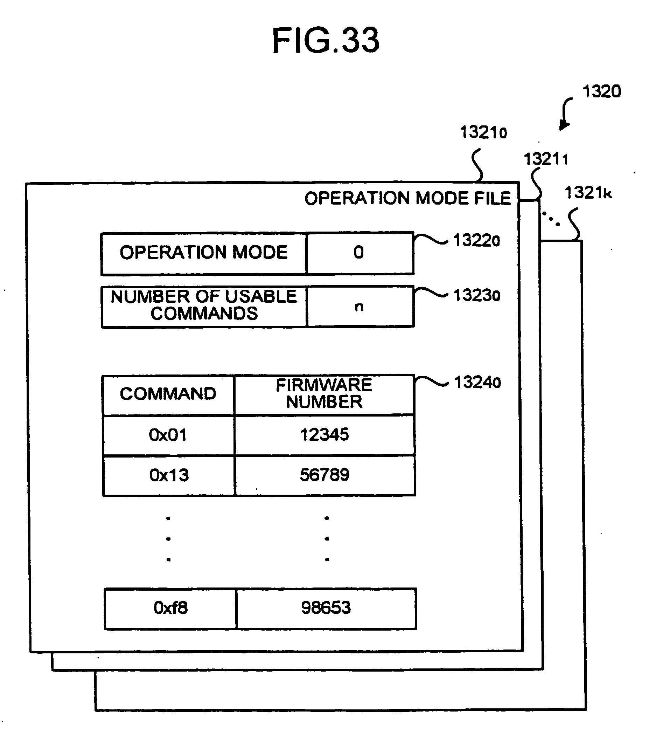

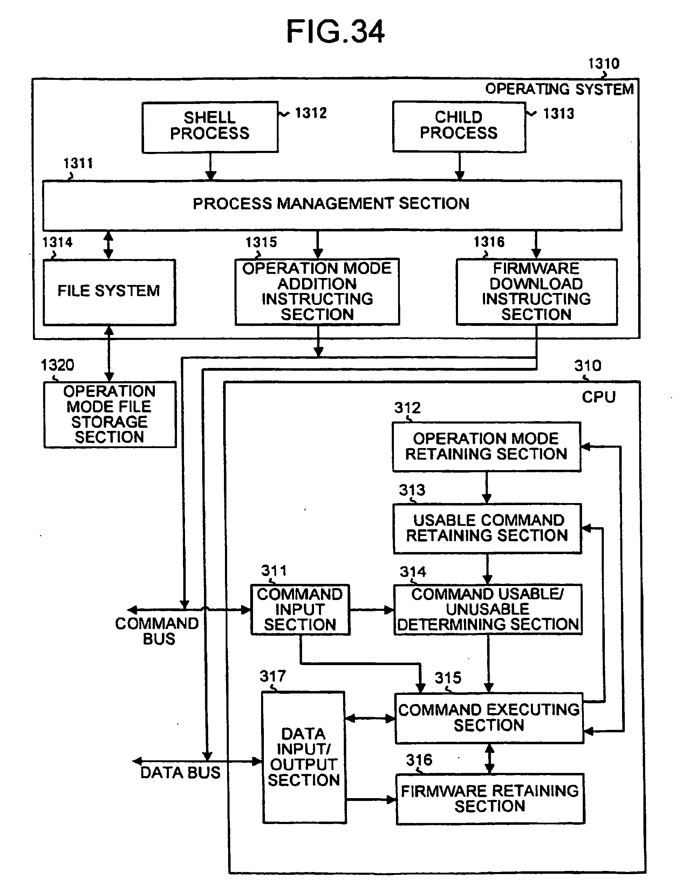

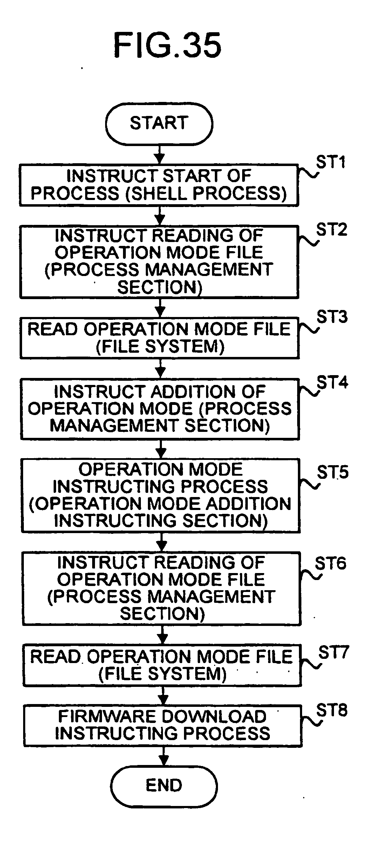

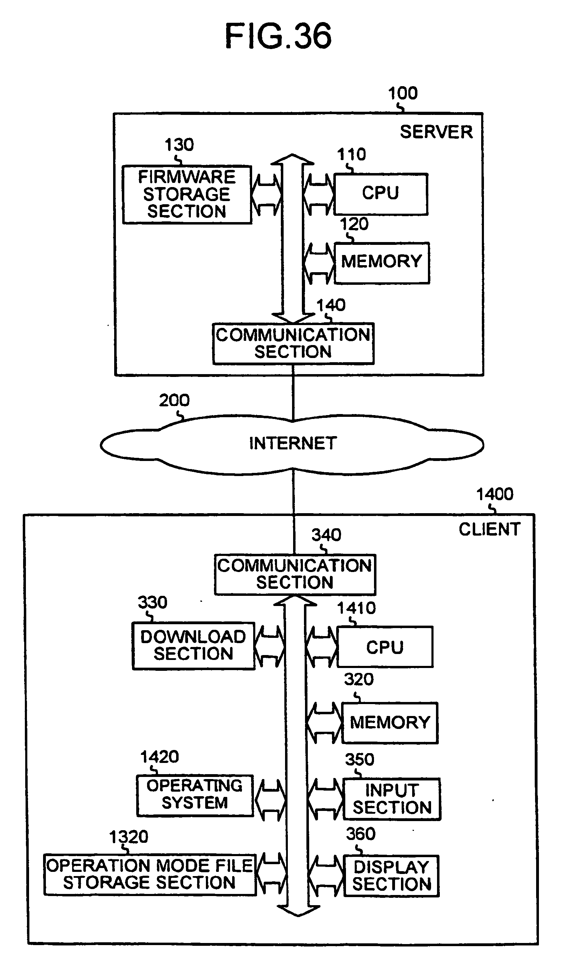

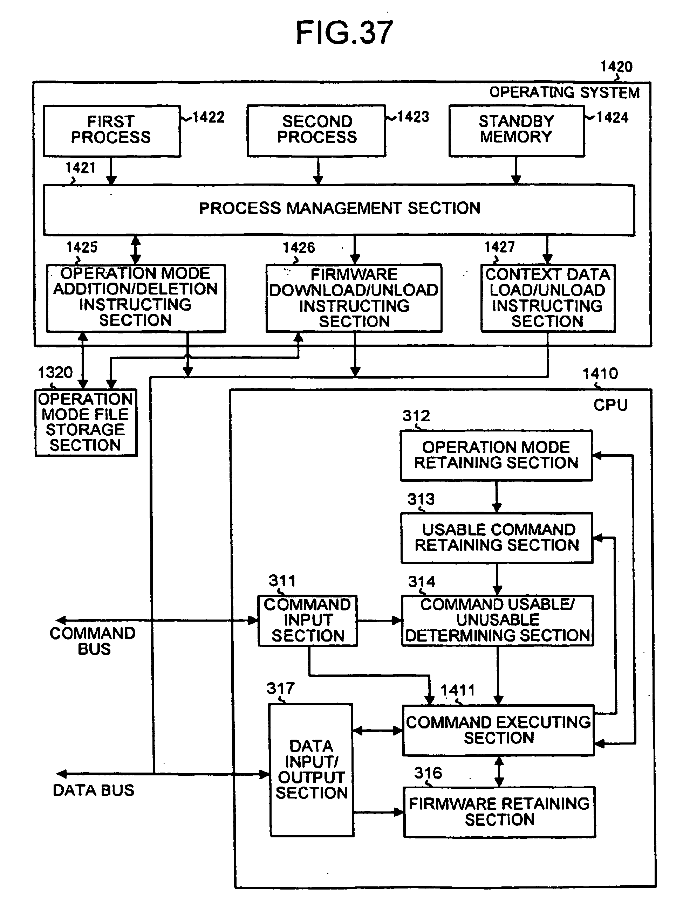

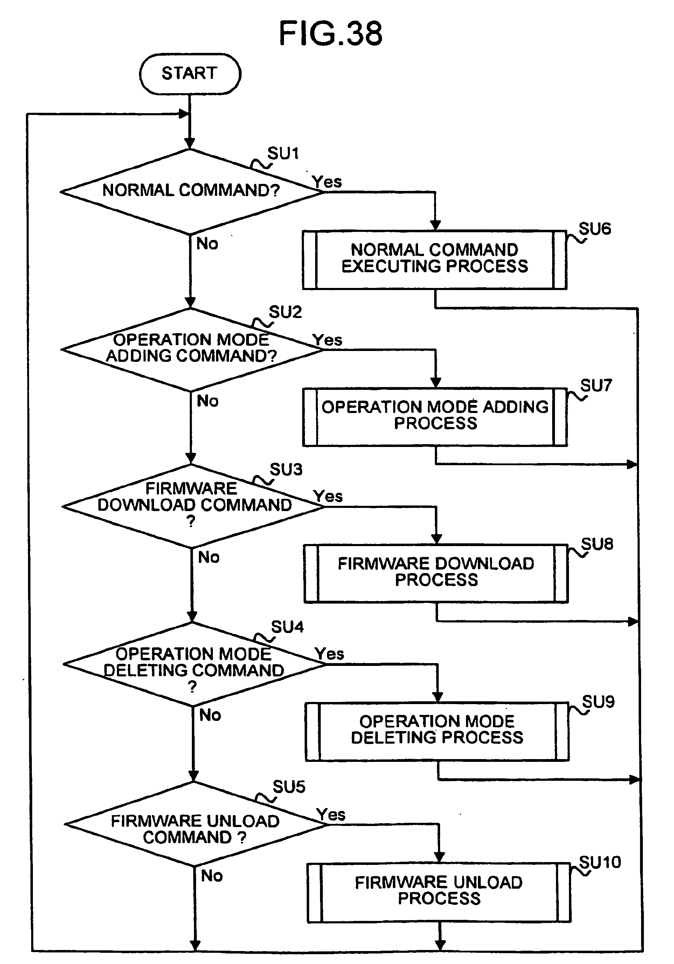

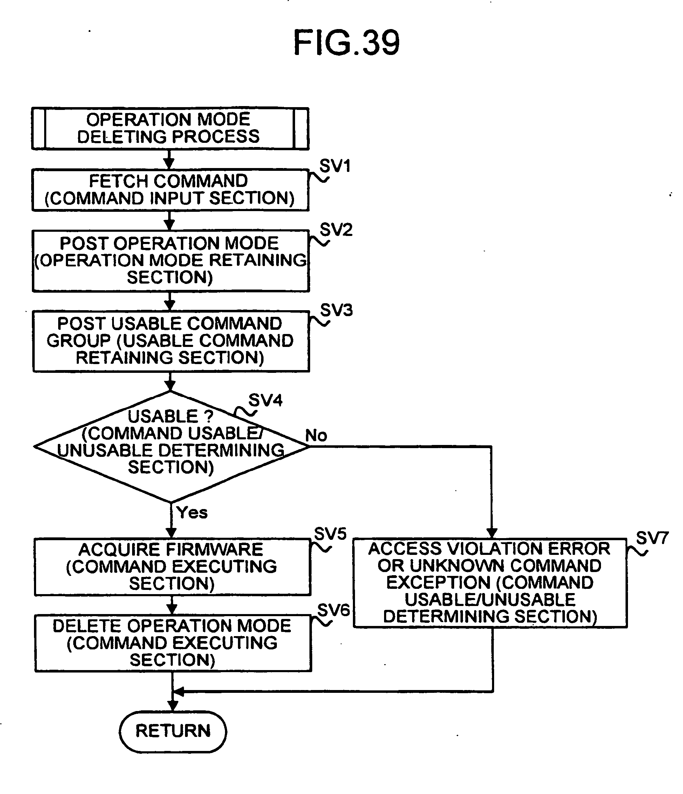

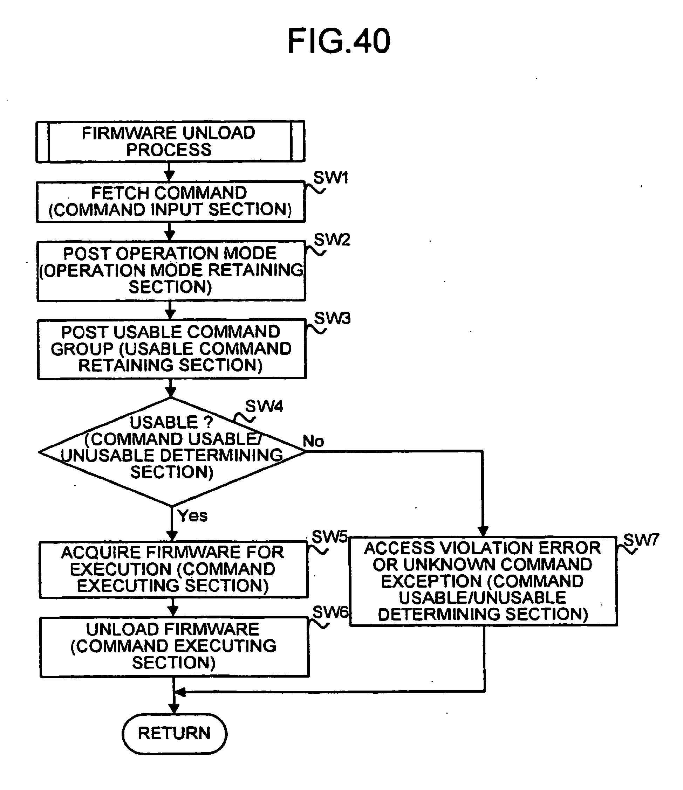

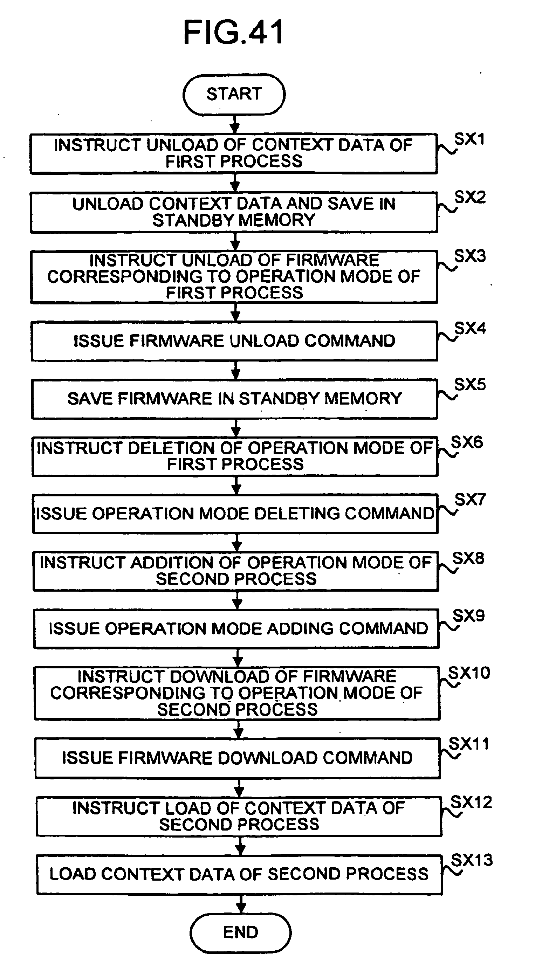

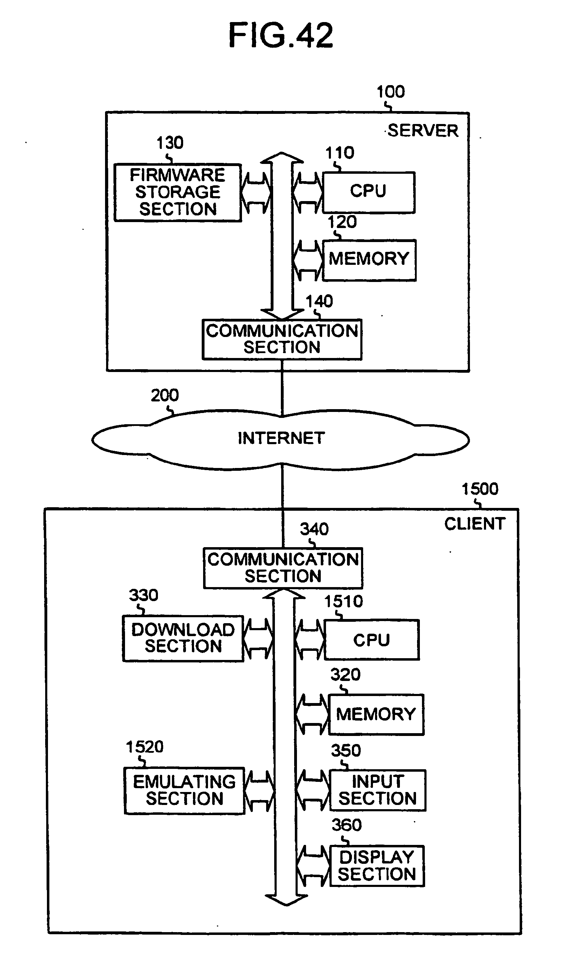

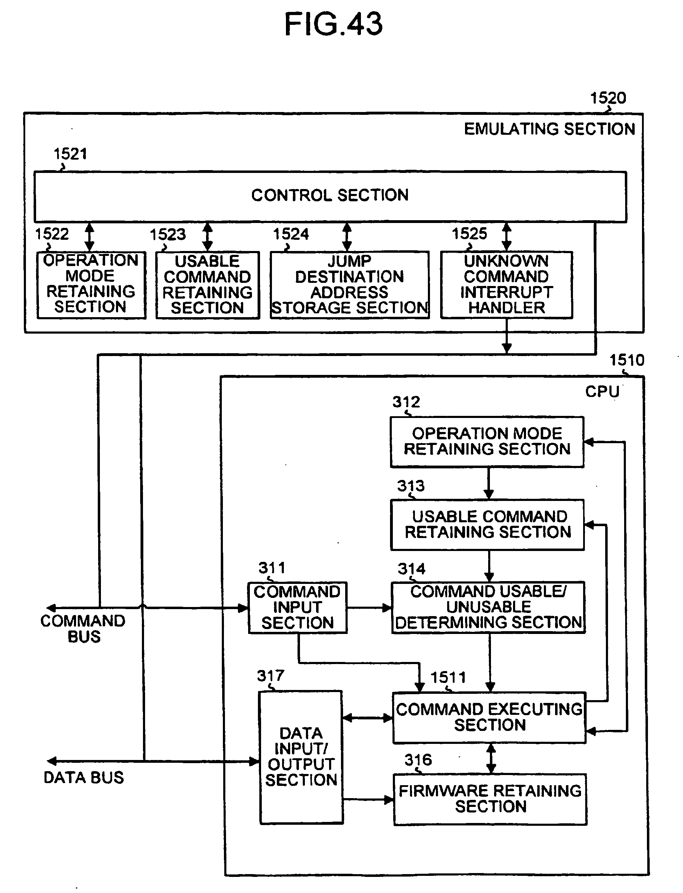

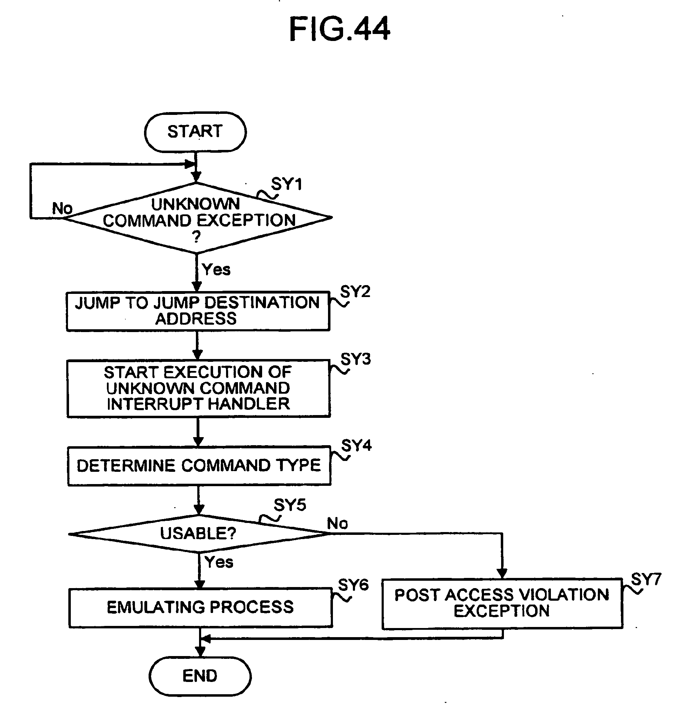

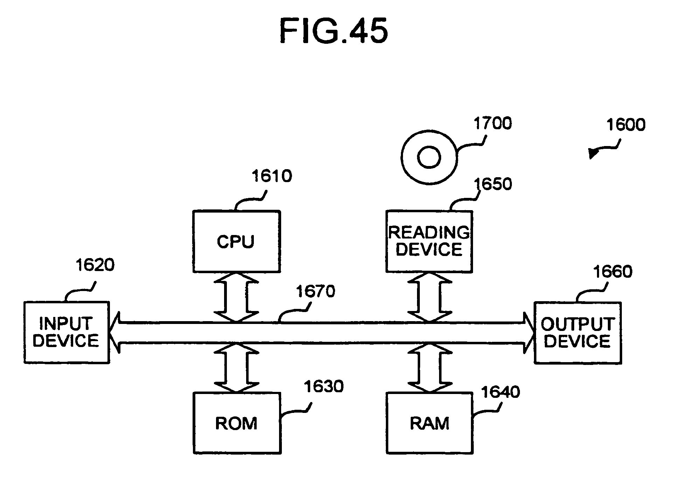

Fig. 1 is a block diagram illustrating a constitution according to a first example; Fig. 2 is a block diagram illustrating a constitution of a CPU 310 shown in Fig. 1; Fig. 3 is a diagram illustrating an operation mode/command table 400 in the first embodiment; Fig. 4 is a flowchart explaining an operation of the CPU 310 shown in Fig. 2, an operation of a CPU 1110 shown in Fig. 27, an operation of a CPU 310 shown in Fig. 34 and an operation of a CPU 1510 shown in Fig. 43; Fig. 5 is a flowchart explaining a normal command executing process shown in Figs. 4, 18 and 23; Fig. 6 is a flowchart explaining an operation mode adding process shown in Figs. 4, 18 and 23; Fig. 7 is a flowchart explaining a firmware download process shown in Fig. 4; Fig. 8 is a flowchart explaining an operation of the first example; Fig. 9 is a block diagram illustrating a constitution of a second example; Fig. 10 is a block diagram illustrating a constitution of a CPU 610 shown in Fig. 9; Fig. 11 is a flowchart explaining an operation of the CPU 610 shown in Fig. 10; Fig. 12 is a flowchart explaining the normal command executing process shown in Fig. 11; Fig. 13 is a flowchart explaining the operation mode adding process shown in Fig. 11; Fig. 14 is a flowchart explaining a logic circuit data download process shown in Fig. 11; Fig. 15 is a flowchart explaining an operation of the second example; Fig. 16 is a block diagram illustrating a constitution according to a third example ; Fig. 17 is a block diagram illustrating a constitution of a CPU 810 shown in Fig. 16; Fig. 18 is a flowchart explaining an operation of the CPU 810 shown in Fig. 17; Fig. 19 is a flowchart explaining an encrypted firmware download process shown in Fig. 18; Fig. 20 is a flowchart explaining an operation of a third example; Fig. 21 is a block diagram illustrating a constitution according to a fourth example ; Fig. 22 is a block diagram illustrating a constitution of a CPU 1010 shown in Fig. 21; Fig. 23 is a flowchart explaining an operation of the CPU 1010 shown in Fig. 21; Fig. 24 is a flowchart explaining a firmware with digital signature download process shown in Fig. 23; Fig. 25 is a flowchart explaining an operation of the fourth example; Fig. 26 is a block diagram illustrating a constitution according to an embodiment of the present invention; Fig. 27 is a block diagram illustrating a constitution of a CPU 1110 shown in Fig. 26; Fig. 28 is a diagram illustrating an operation mode/resource table 1200 according to the invention; Fig. 29 is a flowchart explaining the normal command executing process in the invention; Fig. 30 is a flowchart explaining an access control process shown in Fig. 29; Fig. 31 is a flowchart explaining the operation mode adding process in the invention; Fig. 32 is a block diagram illustrating a constitution of a sixth example ; Fig. 33 is a diagram illustrating a data structure of operation mode files 13210 to 1321k in the sixth example; Fig. 34 is a block diagram illustrating constitutions of an operating system 1310 and the CPU 310 shown in Fig. 32; Fig. 35 is a flowchart explaining an operation of the operating system 1310 shown in Fig. 34; Fig. 36 is a block diagram illustrating a constitution according to a seventh example ; Fig. 37 is a block diagram illustrating constitutions of a CPU 1410 and an operating system 1420 shown in Fig. 36; Fig. 38 is a flowchart explaining an operation of the CPU 1410 shown in Fig. 37; Fig. 39 is a flowchart explaining an operation mode deleting process shown in Fig. 38; Fig. 40 is a flowchart explaining a firmware unload process shown in Fig. 38; Fig. 41 is a flowchart explaining an operation of the operating system 1420 shown in Fig. 37; Fig. 42 is a block diagram illustrating a constitution according to an eighth example; Fig. 43 is a block diagram illustrating constitutions of a CPU 1510 and an emulating section 1520 shown in Fig. 42; Fig. 44 is a flowchart explaining an operation of the emulating section 1520 shown in Fig. 43; Fig. 45 is a block diagram illustrating a constitution of a modified example; and Fig. 46 is a block diagram illustrating a constitution of a conventional security system.

### BEST MODE FOR CARRYING OUT THE INVENTION

### (First example)

Fig. 1 is a block diagram illustrating a constitution according to the first example. In this drawing, a server 100 provides various firmware to a client 300 via the Internet 200. In the server 100, a CPU 110 controls the providing of the firmware.

A memory 120 retains various data about control in the CPU 110, and it is composed of a RAM (Random Access Memory), a ROM (Read Only Memory), or the like. A firmware storage section 130 stores firmware to be used for command execution in the CPU 310, mentioned later. The firmware is related with a firmware number, and is stored into the firmware storage section 130.

A communication section 140 controls communication in the server 100 according to communication protocols such as TCP/IP (Transmission Control Protocol/Internet Protocol).

The client 300 is connected to the Internet 200, and it has a function for downloading firmware from the server 100 via the Internet 200 and a function for executing various commands using the firmware so as to output results.

In the client 300, a CPU 310 controls to download firmware dynamically and sets an operation mode and a command group, mentioned later. A memory 320 retains various data relating to the control in the CPU 310, and it is composed of a RAM, a ROM, or the like. A download section 330 downloads firmware from the server 100 according to the control of the CPU 310. An input section 350 is an input device such as a keyboard and a mouse. A display section 360 is a display for displaying command executed results or the like in the CPU 310.

Fig. 2 is a block diagram illustrating a constitution of the CPU 310 shown in Fig. 1. In this drawing, a command input section 311 inputs a command therein via a command bus, and fetches the command to a command executing section 315 and a command usable/unusable determining section 314. An operation mode retaining section 312 retains operation modes of the CPU 310.

Fig. 3 illustrates an operation mode/command table 400 which represents a relationship between the operation modes and the commands. In the operation mode/command table 400, the operations modes are designated by "0" to "k". The number of usable commands is set for each operation mode, and this number represents the number of the commands usable in the command executing section 315 in the operation mode.

For example, in the case of the operation mode 0, the number of usable commands is n. That is to say, in the case of the operation mode 0, n types of commands including a command 1 (0x01) to a command n (0xf8) are usable in the command executing section 315.

In the case of the operation mode 1, the number of usable commands is i. That is to say, in the case of the operation mode 1, i types of commands including a command 1 (0x11) to a command i (0xe7) are usable in the command executing section 315. Further, when the operation mode 1 is set, commands other than the command 1 (0x11) to the command i (0xe7) cannot be used in the command executing section 315.

Similarly in the case of the operation mode k, the number of usable commands is 1. That is to say, in the case of the operation mode k, one type of a command 1 (0xff) is usable in the command executing section 315. When only the operation mode k is set, commands other than the command 1 (0xff) cannot be used in the command executing section 315. The operation modes sets in the operation mode retaining section 312 are added dynamically.

With reference to Fig. 2, a usable command retaining section 313 retains usable commands which are related with the operation modes set in the operation mode retaining section 312.

For example, when the operation mode 0 shown in Fig. 3 is set in the operation mode retaining section 312, the command (0x01) to a command n (0xf8) which are related with the operation mode 0 are retained as the usable commands in the usable command retaining section 313.

The command usable/unusable determining section 314 determines whether the command fetched by the command input section 311 is usable. Concretely, the command usable/unusable determining section 314 refers to the operation mode/command table 400 (see Fig. 3), and when the fetched command is included in a command group usable in the current operation mode set in the operation mode retaining section 312, it determines this command as usable.

On the other hand, when the fetched command is not included in the command group, the command usable/unusable determining section 314 determines this command as unusable. In the first embodiment, the usable commands are limited according to the operation modes.

The command executing section 315 executes the command determined as usable by the command usable/unusable determining section 314. Further, the command executing section 315 acquires firmware to be used for executing the command from a firmware retaining section 316.

The firmware retaining section 316 retains firmware related with the command group in the operation mode set in the operation mode retaining section 312. The firmware is downloaded from the server 100 (see Fig. 1). When a new command is added according to addition of an operation mode, the firmware retaining section 316 retains new firmware.

A data input/output section 317 has a function for inputting various data necessary for executing the command in the command executing section 315 and a function for outputting an executed result.

An operation of the first embodiment is explained below with reference to flowcharts shown in Figs. 4 to 8. The CPU 310 determines whether a normal command is input at step SA1 shown in Fig. 4, and in this case a determined result is supposed to be "No". The normal command is a command other than an operation mode adding command and a firmware download command, mentioned later, which is executed in the CPU 310.

The CPU 310 determines whether the operation mode adding command is input at step SA2, and in this case a determined result is supposed to be "No". The operation mode adding command is for adding an operation mode of the operation mode/command table 400 shown in Fig. 3.

The CPU 310 determines whether the firmware download command is input at step SA3. In this case, a determined result is supposed to be "No", and it makes the determination at step SA1. The firmware download command is for setting firmware acquired from the server 100 via the Internet 200 in the CPU 310. Thereafter, the CPU 310 repeats the determinations at steps SA1 to SA3.

When the normal command is input, the CPU 310 sets the determined result at step SA1 to "Yes". The CPU 310 executes a normal command executing process at step SA4.

Concretely, the command input section 311 (see Fig. 2) fetches the normal command input via the command bus to the command usable/unusable determining section 314 and the command executing section 315 at step SB1 shown in Fig. 5. The operation mode retaining section 312 posts the operation mode set at this time to the usable command retaining section 313 at step SB2. The posted operation mode is supposed to be "1" shown in Fig. 3.

The usable command retaining section 313 posts a command group related with the posted operation mode as the usable command group to the command usable/unusable determining section 314 at step SB3. The usable command group in this case includes the command 1 (0x11) to the command i (0xe7) related with the operation mode 1 shown in Fig. 3.

The command usable/unusable determining section 314 determines whether the normal command fetched at step SB1 is usable in the operation mode at step SB4. Concretely, the command usable/unusable determining section 314 determines whether the usable command group posted at step SB3 includes the normal command fetched at step SB1, and in this case, a determined result is supposed to be "Yes".

The command executing section 315 acquires firmware related with the normal command (usable command) fetched at step SB1 from the firmware retaining section 316 at step SB5. The command executing section 315 acquires data to be used for the command execution from the data input/output section 317 at step SB6. The command executing section 315 executes the normal command using the firmware and the data at step SB7. The command executing section 315 outputs a result of executing the normal command via the data input/output section 317 at step SB8.

On the other hand, when the determined result at step SB4 is "No", namely, the normal command fetched at step SB1 is unusable in the operation mode 1, the command usable/unusable determining section 314 processes the normal command as improper authority or undefined command exceptional interruption occurrence (error) at step SB9.

In order to enable the CPU 310 to execute the command n (0xf8) (operation mode 0) unincluded in the command group related with the operation mode 1 shown in Fig. 3, the operation mode 1 may be added. The operation mode adding process is explained below.

When the operation mode adding command is input, the CPU 310 sets the determined result at step SA2 shown in Fig. 4 to "Yes". The CPU 310 executes the operation mode adding process at step SA5.

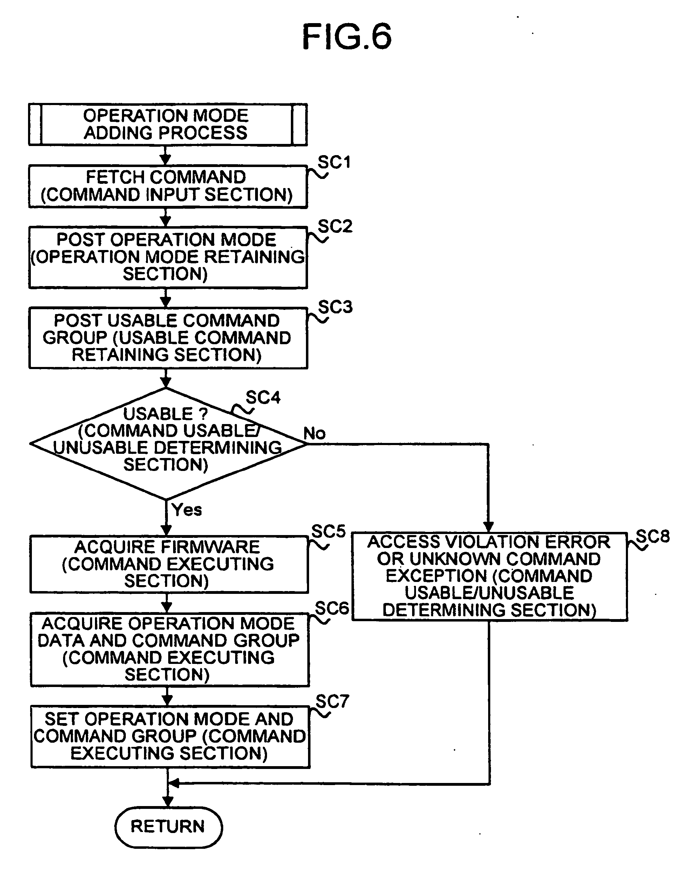

Concretely, the command input section 311 (see Fig. 2) fetches the operation mode adding command input via the command bus to the command usable/unusable determining section 314 and the command executing section 315 at step SC1 shown in Fig. 6. The operation mode retaining section 312 posts the operation mode set at this time (in this case, the operation mode 1) to the usable command retaining section 313 at step SC2.

The usable command retaining section 313 posts the command 1 (0x11) to the command i (0xe7) related with the posted operation mode 1 as the usable command group to the command usable/unusable determining section 314 at step SC3.

The command usable/unusable determining section 314 determines whether the operation mode adding command fetched at step SC1 is usable in the operation mode at step SC4. Concretely, the command usable/unusable determining section 314 determines whether the usable command group posted at step SC3 includes the operation mode adding command fetched at step SC1, and in this case, a determined result is supposed to be "Yes".

The command executing section 315 acquires firmware related with the operation mode adding command (usable command) fetched at step SC1 from the firmware retaining section 316 at step SC5.

The command executing section 315 acquires the operation mode data and the command group from the data input/output section 317 at step SC6. In this case, the operation mode data are "0" related with the operation mode to be added (see Fig. 3). The command group includes the command 1 (0x01) to the command n (0xf8) related with the operation mode 0 shown in Fig. 3.

The command executing section 315 sets the operation mode 0 to be added to the operation mode retaining section 312, and sets a command group related with the operation mode 0 in the usable command retaining section 313 at step SC7. As a result, the command group 0 is usable in the operation mode.

On the other hand, when the determined result at step SC4 is "No", namely, the operation mode adding command fetched at step SC1 is unusable in the operation mode 1, the command usable/unusable determining section 314 processes this command as improper authority or undefined command exceptional interruption occurrence (error) at step SC8.

In the command group related with the operation mode 0 added by the operation mode adding process, when the firmware necessary for executing the command is not retained in the firmware retaining section 316, the firmware should be downloaded from the server 100. The firmware download process is explained below.

In this case, the download section 330 shown in Fig. 1 determines whether a download request is made from the CPU 310 at step SE1 shown in Fig. 8. In this case, a determined result is supposed to be "No", and the determination is repeated.

When the CPU 310 requests the download section 330 to download the firmware, the download section 330 sets the determined result at step SE1 to "Yes". The download section 330 specifies a firmware number corresponding to the firmware requested by the CPU 310 based on a firmware/firmware number table (not shown) at step SE2. The download section 330 posts the firmware download request to the server 100 via the Internet 200 based on the firmware number.

As a result, the CPU 110 of the server 100 reads the firmware from the firmware storage section 130 using the firmware number as a key at step SE3, and transmits the firmware to the download section 330 of the client 300.

When the firmware is transmitted, at step SE4, the download section 330 issues the firmware download command to the CPU 310, and makes the determination at step SE1.

When the firmware download command is input, the CPU 310 sets the determined result at step SA3 shown in Fig. 4 to "Yes". The CPU 310 executes the firmware download process at step SA6.

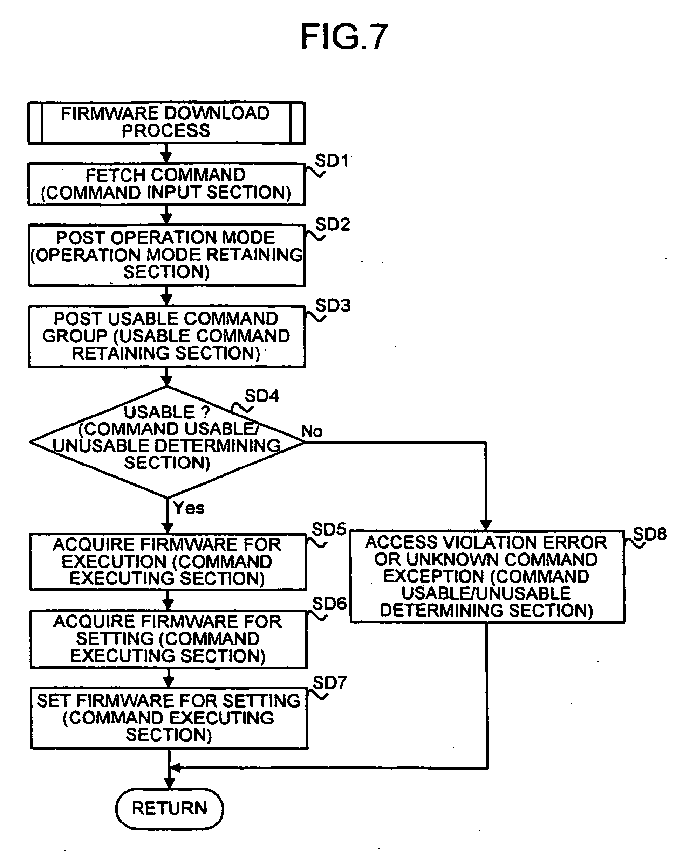

Concretely, the command input section 311 (see Fig. 2) fetches the firmware download command input via the command bus to the command usable/unusable determining section 314 and the command executing section 315 at step SD1 shown in Fig. 7. The operation mode retaining section 312 posts the operation mode set at this time (in this case, the operation modes 0 and 1) to the usable command retaining section 313 at step SD2.

The usable command retaining section 313 posts the command 1 (0x01) to the command n (0xf8), and the command 1 (0x11) to the command i (0xe7) related with the posted operation modes 0 and 1 as the usable command groups to the command usable/unusable determining section 314 at step SD3.

The command usable/unusable determining section 314 determines whether the firmware download command fetched at step SD1 is usable in the operation modes 0 and 1 at step SD4. Concretely, the command usable/unusable determining section 314 determines whether the usable command groups posted at step SD3 include the firmware download command fetched at step SD1. In this case, a determined result is supposed to be "Yes".

The command executing section 315 acquires firmware for execution related with the firmware download command (usable command) fetched step SD1 from the firmware retaining section 316 at step SD5.

The command executing section 315 acquires the firmware for setting from the download section 330 via the data input/output section 317 and the data bus based on the firmware download command and the related firmware for execution at step SD6.

The command executing section 315 sets the firmware for setting in the firmware retaining section 316 at step SD7. As a result, the command group is usable in the operation mode 0 added by the operation mode adding process.

On the other hand, when the determined result at step SD4 is "No", namely, the firmware download command fetched at step SD1 is unusable in the operation modes 0 and 1, the command usable/unusable determining section 314 processes this command as improper authority or undefined command exceptional interruption occurrence (error) at step SD8.

As explained above, according to the first example, the dynamically specified operation mode in the plural operation modes is added into the operation mode retaining section 312 shown in Fig. 2, and the command related with the added operation mode is set in the usable command retaining section 313. Further, the firmware to be used for executing the command is acquired from the external server 100 (see Fig. 1). For this reason, while the security is being maintained, the extensibility can be improved, and the cost can be reduced.

### (Second Example)

The first example explains the example that the command executing section 315 (see Fig. 2) executes the command using the firmware. The command may be, however, executed by using a logic circuit instead of the firmware. This constitutional example is explained below as the second example.

Fig. 9 is a block diagram illustrating a constitution according to the second example. In this drawing, like portions corresponding to the portions shown in Fig. 1 are designated by like reference numbers, and the explanation thereof is omitted. A server 500 provides logic circuit data to a client 600 via the Internet 200.

The logic circuit data are used for generating a logic circuit which realizes the function of the firmware in the first embodiment. In the server 500, a CPU 510 controls providing of the logic circuit data.

A logic circuit data storage section 520 stores a plurality of logic circuit data for generating the logic circuit to be used for executing the command in a CPU 610, mentioned later, thereinto. The logic circuit data are related with logic circuit data numbers, so as to be stored into the logic circuit data storage section 520.

The client 600 is connected to the Internet 200. The client 600 has a function for downloading the logic circuit data from the server 500 via the Internet 200, a function for generating the logic circuit based on the logic circuit data, and a function for executing various commands using the logic circuit so as to output results.

In the client 600, the CPU 610 controls dynamic download of the logic circuit data and sets operation modes and command groups, mentioned later. A download section 620 downloads the logic circuit data from the server 500 according to control of the CPU 610.

Fig. 10 is a block diagram illustrating a constitution of the CPU 610 shown in Fig. 9. In this drawing, portions corresponding to those in Fig. 2 are designated by the same reference numbers, and the explanation thereof is omitted. In the CPU 610, a command executing section 611 has the logic circuit which is dynamically generated, and executes a command determined as usable by the command usable/unusable determining section 314 in the logic circuit. Moreover, the command executing section 611 makes a logic circuit generating section 612 dynamically generate the logic circuit based on the logic circuit data related with the command. The logic circuit generating section 612 retains the logic circuit data related with the command group in the operation modes set in the operation modes retaining section 312. The logic circuit generating section 612 generates the logic circuit, which is related with the command to be executed by the command executing section 611 under the control of the command executing section 611, in the command executing section 611.

An operation of the second example is explained below with reference to flowcharts shown in Figs. 11 to 15. The CPU 610 determines whether a normal command is input at step SF1 shown in Fig. 11, and in this case, a determined result is supposed to be "No". The normal command is a command other than the operation mode adding command in the first embodiment and the logic circuit data download command. It is executed by the CPU 610.

The CPU 610 determines whether the operation mode adding command is input at step SF2, and in this case, a determined result is supposed to be "No". The operation mode adding command is for adding an operation mode of the operation mode/command table 400 shown in Fig. 3.

The CPU 610 determines whether the logic circuit data download command is input at step SF3. In this case, a determined result is supposed to be "No", and the determination at step SF1 is made. The logic circuit data download command is for downloading the logic circuit data from the server 500 via the Internet 200. Thereafter, the CPU 610 repeats the determinations at steps SF1 to SF3.

When the normal command is input, the CPU 610 sets the determined result at step SF1 to "Yes". The CPU 610 executes the normal command executing process at step SF4.

Concretely, the command input section 311 (see Fig. 10) fetches the normal command input via the command bus to the command usable/unusable determining section 314 and the command executing section 611 at step SG1 shown in Fig. 12. The operation mode retaining section 312 posts the operation mode set at this time to the usable command retaining section 313 at step SG2. The posted operation mode is supposed to be "1" shown in Fig. 3.

The usable command retaining section 313 posts the command group related with the posted operation mode as the usable command group to the command usable/unusable determining section 314 at step SG3. The usable command group in this case includes the command 1 (0x11) to the command i (0xe7) related with the operation mode 1 shown in Fig. 3.

The command usable/unusable determining section 314 determines whether the normal command fetched at step SG1 is usable in the operation mode at step SG4. Concretely, the command usable/unusable determining section 314 determines whether the usable command group posted at step SG3 includes the normal command fetched at step SG1. In this case, a determined result is supposed to be "Yes".

At step SG5, the command executing section 611 instructs the logic circuit generating section 612 to generate the logic circuit related with the normal command (usable command) fetched at step SG1. The logic circuit generating section 612 generates the logic circuit in the command executing section 611 based on the logic circuit data related with the normal command at step SG6.

The command executing section 611 acquires data to be used for executing the command from the data input/output section 317 at step SG7. The command executing section 611 executes the normal command using the generated logic circuit and the data at step SG8. The command executing section 611 outputs a result of executing the normal command via the data input/output section 317 at step SG9.

On the other hand, when the determined result at step SG4 is "No", namely, the normal command fetched at step SG1 is unusable in the operation mode 1, the command usable/unusable determining section 314 processes the command as improper authority or undefined command exceptional interruption occurrence (error) at step SG10.

In order to enable the CPU 610 to execute the command n (0xf8) (operation mode 0) which is not included in the command group related with the operation mode 1 shown in Fig. 3, the operation mode 1 may be added. The operation mode adding process is explained below.

When the operation mode adding command is input, the CPU 610 sets the determined result at step SF2 shown in Fig. 11 to "Yes". The CPU 610 executes the operation mode adding process at step SF5.

Concretely, the command input section 311 (see Fig. 12) fetches the operation mode adding command input via the command bus to the command usable/unusable determining section 314 and the command executing section 611 at step SH1 shown in Fig. 13. The operation mode retaining section 312 posts the operation mode set at this time (in this case, the operation mode 1) to the usable command retaining section 313 at step SH2.

The usable command retaining section 313 posts the command 1 (0x11) to the command i (0xe7) related with the posted operation mode 1 as the usable command group to the command usable/unusable determining section 314 at step SH3.

The command usable/unusable determining section 314 determines whether the operation mode adding command fetched at step SH1 is usable in the operation mode at step SH4 similarly to step SC4 (see Fig. 6). In this case, a determined result is supposed to be "Yes".

At step SH5, the command executing section 611 instructs the logic circuit generating section 612 to generate the logic circuit related with the operation mode adding command (usable command) fetched at step SH1. The logic circuit generating section 612 generates the logic circuit in the command executing section 611 based on the logic circuit data related with the operation mode adding command at step SH6.

The command executing section 611 acquires the operation mode data and the command group from the data input/output section 317 at step SH7. In this case, the operation mode data are "0" related with the operation mode to be added (see Fig. 3). The command group includes the command 1 (0x01) to the command n (0xf8) related with the operation mode 0 shown in Fig. 3.

The command executing section 611 sets the operation mode 0 to be added into the operation mode retaining section 312, and sets the command group related with the operation mode 0 into the usable command retaining section 313 at step SH8. As a result, the command group is usable in the operation mode 0.

On the other hand, when the determined result at step SH4 is "No", the command usable/unusable determining section 314 processes the command as improper authority or undefined command exceptional interruption occurrence (error) at step SH9.

In the command group related with the operation mode 0 added by the operation mode adding process, when the logic circuit data necessary for executing the command are not retained in the logic circuit data retaining section 316, the logic circuit data should be downloaded from the server 500. The logic circuit data download process is explained below.

In this case, the download section 620 shown in Fig. 9 determines whether the download is requested by the CPU 610 at step SJ1 shown in Fig. 15. In this case, a determined result is supposed to be "No", and the determination is repeated.

When the CPU 610 requests the download section 620 to download the logic circuit data, the download section 620 sets the determined result at step SJ1 to "Yes". The download section 620 specifies a logic circuit data number related with the logic circuit data requested by the CPU 610 based on the logic circuit data/logic circuit data number table (not shown) at step SJ2.

The download section 620 gives the logic circuit data download request to the server 500 via the Internet 200 based on the logic circuit data number.

As a result, the CPU 510 of the server 500 reads the logic circuit data from the logic circuit data storage section 520 using the logic circuit data number as a key at step SJ3. The CPU 510 transmits the logic circuit data to the download section 620 of the client 600.

When the logic circuit data are transmitted, the download section 620 issues the logic circuit data download command to the CPU 610 at step SJ4, and makes the determination at step SJ1.

When the logic circuit data download command is input, the CPU 610 sets the determined result at step SF3 shown in Fig. 11 to "Yes". The CPU 610 executes the logic circuit data download process at step SF6.

Concretely, the command input section 311 (see Fig. 12) fetches the logic circuit data download command input via the command bus to the command usable/unusable determining section 314 and the command executing section 611 at step SI1 shown in Fig. 14. The operation mode retaining section 312 posts the operation modes set at this time (in this case, the operation modes 0 and 1) to the usable command retaining section 313 at step SI2.

The usable command retaining section 313 posts the command 1 (0x01) to the command n (0xf8), and the command 1 (0x11) to the command i (0xe7) related with the posted operation modes 0 and 1 as the usable command groups to the command usable/unusable determining section 314 at step SI3.

The command usable/unusable determining section 314 determines whether the logic circuit data download command fetched at step SI1 is usable in the operation modes 0 and 1 at step SI4. In this case, a determined result is supposed to be "Yes".

At step SI5, the command executing section 611 instructs the logic circuit generating section 612 to generate a logic circuit related with the logic circuit data download command (usable command) fetched at step SI1. The logic circuit generating section 612 generates the logic circuit in the command executing section 611 based on the logic circuit data related with the logic circuit data download command at step SI6.

The command executing section 611 acquires the logic circuit data for setting from the download section 620 via the data input/output section 317 and the data bus based on the logic circuit data download command and the generated logic circuit at step S17.

The command executing section 611 sets the logic circuit data for setting in the logic circuit generating section 612 at step SI8. As a result, the command group is usable in the operation mode 0 added by the operation mode adding process.

On the other hand, when the determined result at step SI4 is "No", namely, the logic circuit data download command fetched at step SI1 is unusable in the operation modes 0 and 1, the command usable/unusable determining section 314 processes the command as improper authority or undefined command exceptional interruption occurrence (error) at step S19.

According to the second example, the operation mode dynamically specified in the plural operation modes is added into the operation mode retaining section 312 shown in Fig. 10, and the command related with the added operation mode is set in the usable command retaining section 313. Further, the logic circuit data, which are related with the operation mode retained in the operation mode retaining section 312 and is for generating the logic circuit to be used for executing the command in the command executing section 611, are acquired from the external server 500 (see Fig. 9). For this reason, while the security is being maintained, the extensibility can be improved, and the cost can be reduced.

### (Third Example)

The first example does not particularly explain the security of firmware downloaded from the server 100 (see Fig. 1), but the security may be strengthened by using an encryption technique. This constitutional example is explained below as the third embodiment.

Fig. 16 is a block diagram illustrating a constitution according to the third example. In this drawing, like portions corresponding to those in Fig. 1 are designated by like reference numbers, and the explanation thereof is omitted.

A server 700 shown in Fig. 16 provides encrypted firmware to a client 800 via the Internet 200. In the server 700, a CPU 710 controls providing of the encrypted firmware.

A plaintext firmware storage section 720 stores plaintext firmware to be used for executing commands in a CPU 810, mentioned later. The plaintext firmware is related with a plaintext firmware number, so as to be stored into the plaintext firmware storage section 720. The plaintext firmware in the third embodiment is the same as that in the first embodiment.

An encryption section 730 encrypts plaintext firmware according to a RSA (Rivest Shamir Adleman) encryption system, a DES (Data Encryption Standard) encryption system or the like under control of the CPU 710, and outputs it as an encrypted firmware.

The client 800 is connected to the Internet 200. The client 800 has a function for downloading the encoded firmware from the server 700 via the Internet 200, a function for decrypting the encrypted firmware, and a function for executing various commands using the decrypted plaintext firmware so as to output a result.

In the client 800, the CPU 810 controls dynamic download of the encrypted firmware, decrypts the encrypted firmware, and sets the operation modes and the command groups explained in the first embodiment.

A download section 820 downloads the encrypted firmware from the server 700 by control of the CPU 810.

Fig. 17 is a block diagram illustrating a constitution of the CPU 810 shown in Fig. 16. In this drawing, like portions corresponding to those in Fig. 2 are designated by like reference numbers, and the explanation thereof is omitted.

In the CPU 810 shown in Fig. 17, a command executing section 811 executes a command determined as usable by the command usable/unusable determining section 314. The command executing section 811 acquires the plaintext firmware to be used for executing the command from the firmware retaining section 316. A decryption section 812 decrypts the encrypted firmware downloaded by the download section 820 (see Fig. 16) under control of the command executing section 811. The firmware retaining section 316 retains a decrypted result as the plaintext firmware.

In the third example the firmware retaining section 316 retains the plaintext firmware related with the command group in the operation mode set in the operation mode retaining section 312.

The plaintext firmware is obtained by decrypting the encrypted firmware downloaded from the server 700 (see Fig. 16). Moreover, when an operation mode is added, a new plaintext firmware is retained in the firmware retaining section 316.

An operation of the third example is explained below with reference to flowcharts shown in Figs. 18 to 20. The CPU 810 determines whether a normal command is input at step SK1 shown in Fig. 18 similarly to step SA1 (see Fig. 4). In this case, a determined result is supposed to be "No".

The CPU 810 determines whether the operation mode adding command is input at step SK2 similarly to step SA2 (see Fig. 4), and in this case, a determined result is supposed to be "No".

The CPU 810 determines whether the encrypted firmware download command is input at step SK3. In this case, a determined result is supposed to be "No", and the determination at step SK1 is made. The encrypted firmware download command is for downloading the encrypted firmware from the server 700 via the Internet 200. The CPU 810 repeats the determinations at steps SK1 to SK3.

When the normal command is input, the CPU 810 sets the determined result at step SK1 to "Yes". The CPU 810 executes the normal command executing process (see Fig. 5) at step SK4 similarly to the first example.

When the operation mode adding command is input, the CPU 810 sets the determined result at step SK2 to "Yes". The CPU 810 executes the operation mode adding process (see Fig. 6) at step SK5 similarly to the first embodiment.

In the command group related with the operation mode added by the operation mode adding process, when the plaintext firmware necessary at the time of executing the command is not retained in the firmware retaining section 316, the encrypted firmware corresponding to the plaintext firmware should be downloaded from the server 700. The encrypted firmware downloading process is explained below.

In this case, the download section 820 shown in Fig. 16 determines whether the download is requested from the CPU 810 at step SM1 shown in Fig. 20. In this case, a determined result is supposed to be "No", and the determination is repeated.

When the CPU 810 requests the download section 820 to download the encrypted firmware, the download section 820 sets the determined result at step SM1 to "Yes". The download section 820 specifies the firmware number related with the encrypted firmware requested from the CPU 810 based on the firmware/firmware number table (not shown) at step SM2. The download section 820 gives the encrypted firmware download request to the server 700 via the Internet 200 based on the firmware number.

As a result, the CPU 710 of the server 700 reads the plaintext firmware from the plaintext firmware storage section 720 using the firmware number as a key at step SM3, and transmits it to the encryption section 730. The encryption section 730 encrypts the plaintext firmware according to the RSA encryption system, the DES encryption system or the like at step SM4.

The CPU 710 transmits the encrypted firmware from the encryption section 730 to the download section 820 of the client 800 via the Internet 200 at step SM5.

When the encrypted firmware is transmitted, the download section 820 issues the encrypted firmware download command to the CPU 810 at step SM6, and makes the determination at step SM1.

When the encrypted firmware download command is input, the CPU 810 sets the determined result at step SK3 shown in Fig. 18 to "Yes". The CPU 810 executes the encrypted firmware download process at step SK6.

Concretely, the command input section 311 (see Fig. 17) fetches the encrypted firmware download command input via the command bus to the command usable/unusable determining section 314 and the command executing section 811 at step SL1 shown in Fig. 19. The operation mode retaining section 312 posts the operation mode set at this time to the usable command retaining section 313 at step SL2.

The usable command retaining section 313 posts the command group related with the posted operation mode as the usable command group to the command usable/unusable determining section 314 at step SL3.

The command usable/unusable determining section 314 determines whether the encrypted firmware download command fetched at step SL1 is usable in the operation mode at step SL4. In this case, a determined result is supposed to be "Yes".

The command executing section 811 acquires the plaintext firmware for executing related with the encrypted firmware download command (usable command) fetched at step SL1 from the firmware retaining section 316 at step SL5.

The command executing section 811 acquires the encrypted firmware for setting from the download section 820 via the data input/output section 317 and the data bus at step SL6 based on the encrypted firmware download command and the related plaintext firmware for execution.

The command executing section 811 instructs the decryption section 812 to decrypt the encrypted firmware at step SL7. The decryption section 812 decrypts the encrypted firmware at step SL8. The decryption section 812 sets the decrypted plaintext firmware in the firmware retaining section 316 under the control of the command executing section 811 at step SL9. As a result, the command group is usable in the operation mode added by the operation mode adding process.

On the other hand, when the determined result at step SL4 is "No", the command usable/unusable determining section 314 processes the command as improper authority or undefined command exceptional interruption occurrence (error) at step SL10.

According to the third example, after the encrypted firmware is acquired from the external server 700 (see Fig. 16), it is decrypted by the decryption section 812 (see Fig. 17). For this reason, the security during the acquiring of the firmware can be strengthened.

### (Fourth Example)

The third example explains the constitutional example that the security is strengthened by encrypting the firmware, but the security may be strengthened by using a digital signature technique. This constitutional example is explained below as the fourth embodiment.

Fig. 21 is a block diagram illustrating a constitution according to the fourth example. In this drawing, like portions corresponding to those in Fig. 1 are designated by like reference numbers, and the explanation thereof is omitted

A server 900 shown in Fig. 21 provides firmware with digital signature to a client 1000 via the Internet 200. In the server 900, a CPU 910 controls the providing of the firmware with digital signature.

A digital signature section 920 generates firmware with digital signature under control of the CPU 910. The digital signature is a security technique which represents that the firmware is sent from a proper sender and the firmware is not interpolated.

The client 1000 is connected to the Internet 200. The client 1000 has a function for downloading firmware with digital signature from the server 900 via the Internet 200, a function for authorizing the firmware with digital signature, and a function for executing various commands using the authenticated firmware so as to output results.

In the client 1000, a CPU 1010 controls the dynamic download of the firmware with digital signature, authenticates the firmware with digital signature, and sets the operation modes and the command groups explained in the first embodiment.

A download section 1020 downloads the firmware with digital signature form the server 900 by the control of the CPU 1010.

Fig. 22 is a block diagram illustrating a constitution of the CPU 1010 shown in Fig. 21. In this drawing, like portions corresponding to those in Fig. 2 are designated by like reference numbers, and the explanation thereof is omitted.

In the CPU 1010 shown in Fig. 22, a command executing section 1011 executes a command determined as usable by the command usable/unusable determining section 314. Moreover, the command executing section 1011 acquires firmware to be used for executing the command from the firmware retaining section 316. An authentication section 1012 authenticates the firmware with digital signature downloaded by the download section 1020 (see Fig. 21) under the control of the command executing section 1011. When an authentication result is OK; the firmware is retained in the firmware retaining section 316.

An operation of the fourth example is explained below with reference to flowcharts shown in Figs. 23 to 25.

The CPU 1010 determines whether a normal command is input at step SN1 shown in Fig. 23 similarly to steps SA1 (see Fig. 4), and in this case, a determined result is supposed to be "No".

The CPU 1010 determines whether the operation mode adding command is input at step SN2 similarly to step SA2 (see Fig. 4), and in this case, a determined result is supposed to be "No".

The CPU 1010 determines whether a firmware with digital signature download command is input at step SN3. In this case, a determined result is supposed to be "No", and the determination at step SN1 is made. The firmware with digital signature download command is a command for downloading the firmware with digital signature from the server 900 via the Internet 200. Thereafter, the CPU 1010 repeats the determinations at steps SN1 to SN3.

When a normal command is input, the CPU 1010 sets the determined result at step SN1 to "Yes". The CPU 1010 executes the normal command executing process (see Fig. 5) at step SN4 similarly to the first example.

Further, when the operation mode adding command is input, the CPU 1010 sets the determined result at step SN2 to "Yes". The CPU 1010 executes the operation mode adding process (see Fig. 6) at step SN5 similarly to the first example.

In the command group related with the operation mode added by the operation mode adding process, when the firmware necessary for executing the command is not retained in the firmware retaining section 316, the firmware with digital signature related with the firmware should be downloaded from the server 900. The firmware with digital signature download process is explained below.

In this case, the download section 1020 shown in Fig. 21 determines whether the CPU 1010 requests the download at step SP1 shown in Fig. 25. In this case, a determined result is supposed to be "No", and the determination is repeated.

When the CPU 1010 requests the download section 1020 to download the firmware with digital signature, the download section 1020 sets the determined result at step SP1 to "Yes". The download section 1020 specifies a firmware number related with the firmware requested from the CPU 1010 based on the firmware/firmware number table (not shown) at step SP2. The download section 1020 sends the firmware with digital signature download request to the server 900 via the Internet 200 based on the firmware number.

As a result, the CPU 910 of the server 900 reads the firmware from the firmware storage section 130 using the firmware number as a key, and transmits it to the digital signature section 920 at step SP3. The digital signature section 920 generates the firmware with digital signature at step SP4.

The CPU 910 transmits the firmware with digital signature from the digital signature section 920 to the download section 1020 of the client 1000 via the Internet 200 at step SP5.

When the firmware with digital signature is transmitted, the download section 1020 issues the firmware with digital signature download command to the CPU 1010 at step SP6, and makes the determination at step SP1.

When the firmware with digital signature download command is input, the CPU 1010 sets the determined result at step SN3 shown in Fig. 23 to "Yes". The CPU 1010 executes the firmware with digital signature download process at step SN6.

Concretely, the command input section 311 (see Fig. 22) fetches the firmware with digital signature download command input via the command bus to the command usable/unusable determining section 314 and the command executing section 1011 at step SO1 shown in Fig. 24. The operation mode retaining section 312 posts the operation mode set at this time to the usable command retaining section 313 at step SO2.

The usable command retaining section 313 posts the command group related with the posted operation mode as the usable command group to the command usable/unusable determining section 314 at step SO3.

The command usable/unusable determining section 314 determines whether the firmware with digital signature download command fetched at step SO1 is usable in the operation mode at step SO4. In this case, a determined result is supposed to be "Yes".

The command executing section 1011 acquires the firmware for executing related with the firmware with digital signature download command (usable command) fetched at step SO1 from the firmware retaining section 316 at step SO5.

The command executing section 1011 acquires the firmware with digital signature for setting from the download section 1020 via the data input/output section 317 and the data bus based on the firmware with digital signature download command and the related firmware for execution at step SO6.

The command executing section 1011 instructs the authentication section 1012 to authenticate the firmware with digital signature at step SO7. The authentication section 1012 authenticates the firmware with digital signature at step SO8, and posts an authentication result to the command executing section 1011. The command executing section 1011 determines whether the authentication result in the authentication section 1012 is OK at step SO9.

When the authentication result is NG, namely, the firmware for setting is interpolated, the command executing section 1011 sets the determined result at step SO9 to "No". The command executing section 1011 then cancels the setting, and returns to the main routine shown in Fig. 23.

On the other hand, when the authentication result is OK, the command executing section 1011 sets the determined result at step SO9 to "Yes". The authentication section 1012 sets the authenticated firmware in the firmware retaining section 316 under the control of the command executing section 1011 at step SO10. As a result, the command group is usable in the operation mode added by the operation mode adding process.

On the other hand, when the determined result at step SO4 is "No", the command usable/unusable determining section 314 processes the command as improper authority or undefined command exceptional interruption occurrence (error) at step SO11.

As explained above, according to the fourth example, after the firmware with digital signature is acquired from the external server 900 (see Fig. 21), it is authenticated by the authentication section 1012 (see Fig. 22). For this reason, interpolation or the like during the acquiring of the firmware can be prevented.

### (Fifth Embodiment)

The first example does not particularly explain access to resources retained in the CPU (for example, encryption key, signature key, certificate, and the like) at the time of executing the command. The access control may be, however, made. This constitutional example is explained below as the fifth embodiment.

Fig. 26 is a block diagram illustrating a constitution according to the present invention. In this drawing, like parts corresponding to those in Fig. 1 are designated by like reference numbers, and the explanation thereof is omitted.

A client 1100 shown in Fig. 26 is connected to the Internet 200. The client 1100 has a function for downloading firmware from the server 100 via the Internet 200, and a function for executing various commands using the firmware and outputting results.

In the client 1100, a CPU 1110 controls dynamic download of the firmware, sets operation modes and command groups, mentioned later, and control the above-mentioned access.

Fig. 27 is a block diagram illustrating a constitution of the CPU 1110 shown in Fig. 26. In this drawing, like parts corresponding to those in Fig. 2 are designated by like reference numerals, and the explanation thereof is omitted. A command executing section 1111 executes a command determined as usable by the command usable/unusable determining section 314. The command executing section 1111 acquires firmware to be used for executing the command from the firmware retaining section 316. Further, the command executing section 1111 accesses to resources in the CPU 1110 (encryption key, signature key, and the like) according to a type of the command. For example, when the executing command is an encryption command, the command executing section 1111 accesses to the encryption key, and encrypts data using this encryption key.

Encryption keys, signature keys, certificates, CPU IDs ... as resources are retained in an encryption key retaining section 11131, a signature key retaining section 11132, a certificate retaining section 11133, a CPU ID retaining section 11134 ..., respectively. For example, the encryption keys are used when data are encrypted. The signature keys are used when digital signature are given to data.

When the command executing section 1111 accesses to the resources, an access control section 1112 determines whether the access is permitted or rejected according to the operation mode in an operation mode/resource table 1200 shown in Fig. 28.

In the operation mode/resource table 1200, the operation modes include "0" to "k", and they correspond to the operation modes in the operation mode/command table 400 (see Fig. 3).

An accessible number is set for each operation mode, and it is the number of the resources accessible by the command executing section 1111 in the operation modes.

For example, in the case of the operation mode 0, the accessible number is n. That is to say, in the case of the operation mode 0, the command executing section 1111 can access to totally n types of the resources including a resource 1 (encryption key) to a resource n (CPU ID).

In the case of the operation mode 1, the accessible number is i. That is to say, in the case of the operation mode 1, the command executing section 1111 can access to totally i types of the resources including the resource 1 (encryption key) to a resource i (CPU ID).

Similarly in the case of the operation mode k, the accessible number is 1. That is to say, in the case of the operation mode k, the command executing section 1111 can access to one kind of the resource 1 (signature key). Further, when only the operation mode k is set, the command executing section 1111 cannot access to the resources other than the resource 1 (signature key).

An operation of the invention is explained below with reference to the flowcharts shown in Fig. 4 and Figs. 29 to 31. The CPU 1110 determines whether a normal command is input at step SA1 shown in Fig. 4, and in this case, a determined result is supposed to be "No". The CPU 1110 determines whether the operation mode adding command is input at step SA2, and in this case, a determined result is supposed to be "No".

The CPU 1110 determines whether the firmware download command is input at step SA3, and in this case, a determined result is supposed to be "No". Thereafter, the CPU 1110 repeats the determination at steps SA1 to SA3.

When the normal command is input, the CPU 1110 sets the determined result at step SA1 to "Yes". The CPU 1110 executes the normal command executing process at step SA4.

Concretely, the command input section 311 (see Fig. 27) fetches the normal command input via the command bus to the command usable/unusable determining section 314 and the command executing section 1111 at step SQ1 shown in Fig. 29. The operation mode retaining section 312 posts the operation mode set at this time to the usable command retaining section 313 and the access control section 1112 at step SQ2. The posted operation mode is "1" shown in Figs. 3 and 28.

The usable command retaining section 313 posts the command group related with the posted operation mode as the usable command group to the command usable/unusable determining section 314 at step SQ3. The usable command group in this case includes the command 1 (0x11) to the command i (0xe7) related with the operation mode 1 shown in Fig. 3.

The command usable/unusable determining section 314 determines whether the normal command fetched at step SQ1 is usable in the operation mode at step SQ4. Concretely, the command usable/unusable determining section 314 determines whether the usable command group posted at step SQ3 includes the normal command fetched at step SQ1. In this case, a determined result is supposed to be "Yes".

The access control process is executed at step SQ5 so that the access from the command executing section 1111 to the resources (encryption keys, signature keys, certificate, CPU IDs, and the like) is controlled. Concretely, the command executing section 1111 determines whether the access to the resources is necessary at the time of executing the normal command at step SR1 shown in Fig. 30.

In this case, the normal command is encrypted, and thus the encryption key as the resource is necessary. The command executing section 1111, therefore, sets the determined result at step SR1 to "Yes". When the determined result at step SR1 is "No", the command executing section 1111 executes the process at step SQ6 shown in Fig. 29.

The command executing section 1111 posts the resource (encryption key) to the access control section 1112 at step SR2. At step SR3, the access control section 1112 refers to the operation mode/resource table 1200 (see Fig. 28) so as to determine whether the command executing section 1111 can access to the resource (encryption key) posted at step SR2 in the current operation mode 1.

Concretely, the access control section 1112 determines whether the resource 1 (encryption key) to the resource i (CPU ID) corresponding to the operation mode 1 shown in Fig. 28 include the resource (encryption key) posted at step SR2. In this case, a determined result is supposed to be "Yes". The access control section 1112 allows the command executing section 1111 to access to the resource (encryption key) at step SR4.

On the other hand, when the determined result at step SR3 is "No", the access control section 1112 rejects the access of the command executing section 1111 to the resource (encryption key) at step SR5. The access control section 1112 processes the access as improper authority exceptional interruption occurrence (error).

With reference to Fig. 29, the command executing section 1111 acquires firmware related with the normal command (usable command) fetched at step SQ1 from the firmware retaining section 316 at step SQ6.

The command executing section 1111 acquires data to be used for executing the command from the data input/output section 317 at step SQ7. In this case, the command executing section 1111 accesses to the encryption key (the encryption key retaining section 11131) as the resource permitted by the access control section 1112 so as to acquire the encryption key.

The command executing section 1111 executes the normal command using the firmware, the data and the resource (encryption key) at step SQ8. The command executing section 1111 outputs the result of executing the normal command via the data input/output section 317 at step SQ9.

On the other hand, when the determined result at step SQ4 is "No", namely, the normal command fetched at step SQ1 is unusable in the operation mode 1, the command usable/unusable determining section 314 processes the normal command as improper authority or undefined command exceptional interruption occurrence (error) at step SQ10.

The operation mode adding process is explained below. When the operation mode adding command is input, the CPU 1110 sets the determined result at step SA2 shown in Fig. 4 to "Yes". The CPU 1110 executes the operation mode adding process at step SA5.

Concretely, the command input section 311 (see Fig. 27) fetches the operation mode adding command input via the command bus to the command usable/unusable determining section 314 and the command executing section 1111 at step SS1 shown in Fig. 31. The operation mode retaining section 312 posts the operation mode set at this time (in this case, the operation mode 1) to the usable command retaining section 313 at step SS2.

The usable command retaining section 313 posts the command 1 (0x11) to the command i (0xe7) related with the posted operation mode 1 as the usable command group to the command usable/unusable determining section 314 at step SS3.

The command usable/unusable determining section 314 determines whether the operation mode adding command fetched at step SS1 is usable in the operation mode at step SS4. In this case, a determined result is supposed to be "Yes".

When the determined result at step SS4 is "No", namely, the operation mode adding command fetched at step SS1 is unusable in the operation mode 1, the command usable/unusable determining section 314 processes the command as improper authority or undefined command exceptional interruption occurrence (error) at step SS10.

The command executing section 1111 acquires the firmware related with the operation mode adding command (usable command) fetched at step SS1 from the firmware retaining section 316 at step SS5.

The command executing section 1111 acquires the adding operation mode data and the command group from the data input/output section 317 at step SS6. In this case, the adding operation mode data are "0" (see Fig. 3) related with the operation mode to be added. Further, the command group includes the command 1 (1x01) to the command n (0xf8) related with the operation mode 0 shown in Fig. 3.

The command executing section 1111 checks the operation mode (1) set at this time in the operation mode retaining section 312 at step SS7. The command executing section 1111 determines whether the adding operation mode (0) is lower than the current operation mode (1) at step SS8. In other words, the command executing section 1111 determines whether the number of usable commands increases due to the adding operation mode.

That is to say, the command executing section 1111 determines whether the number of the command in the added operation mode dynamically specified is larger than the number of the command in the operation mode retained in the operation mode retaining section 312 (see Fig. 27).

In this case, the command executing section 1111 sets the determined result at step SS8 to "Yes". The command executing section 1111 sets the operation mode 0 to be added into the operation mode retaining section 312, and sets the command group related with the operation mode 0 in the usable command retaining section 313 at step SS9. As a result, the command group is usable in the operation mode 0.

On the other hand, when the determined result at step SS8 is "No", the command executing section 1111 cancels the addition of the operation mode so as to process it as improper authority exceptional interruption occurrence (error) at step SS11.

When the firmware download command is input, the CPU 1110 sets the determined result at step SA3 shown in Fig. 4 to "Yes". The CPU 1110 executes the firmware download process (see Fig. 7) at step SA6 similarly to the first example.

As explained above, according to the invention, the access control section 1112 (see Fig. 27) controls the access to the various resources (encryption key, signature key, certificate, CPU ID and the like) to be used at the time of executing the command according to the operation mode. For this reason, the resources can be dynamically allocated according to the operation mode.

According to the invention, the number of commands in the adding operation mode dynamically specified is larger than the number of commands in the operation mode already retained in the operation mode retaining section 312 (see Fig. 27). Only in this case, the dynamically specified operation mode is added into the operation mode retaining section 312. For this reason, an operation mode can be added under more strict condition, so that the security can be further strengthened.

### (Sixth Example)

In the first example, the addition of operation mode or the firmware download may be instructed by an operating system on the outside of the CPU 310 (see Fig. 1). This constitutional example is explained below as the sixth embodiment.

Fig. 32 is a block diagram illustrating a constitution according to the sixth example. In this drawing, like parts corresponding to those in Fig. 1 are designated by like reference numbers. A client 1300 shown in Fig. 32 is connected to the Internet 200. The client 1300 has a function for downloading firmware from the server 100 via the Internet 200, and a function for executing various commands using firmware so as to output results.

In the client 1300, an operating system 1310 is for instructing the addition of operation mode and the firmware download. An operation mode file storage section 1320 stores operation mode files 13210 to 1321 k shown in Fig. 33 thereinto. The operation mode files 13210 to 1321 k correspond to the operation mode/command table 400 shown in Fig. 3.

The operation mode file 13210 is composed of operation mode data 13220, data about the number of usable commands 13230, and command/firmware number data 13240. The operation mode data 13220 represent the operation mode 0 shown in Fig. 3.

The data about number of usable commands 13230 represent the number of usable command n shown in Fig. 3. The command/firmware number data 13240 include the commands 1 (0x01) to the command n (0x8f) shown in Fig. 3, and firmware numbers for specifying firmware related with the commands.

The operation mode files 13211 to 1321 k have the same data structure as that of the operation mode file 13210, and are composed of the data about the operation modes 1 to k.

In the sixth example, the download section 330 shown in Fig. 32 does not issue the firmware download command, and has only the download function. The firmware download command is issued by the operation system 1310.

Fig. 34 is a block diagram illustrating constitutions of the operating system 1310 and the CPU 310 shown in Fig. 32. In this drawing, like parts corresponding to those in Figs. 2 and 32 are designated by like reference numbers, and the explanation thereof is omitted.

In the operating system 1310 shown in Fig. 34, a process management section 1311 manages a shell process 1312 (addition of operation mode, firmware download, and the like), and a child process 1313.

A file system 1314 reads an operation mode file from the operation mode file storage section 1320 under the control of the process management section 1311. An operation mode addition instructing section 1315 instructs the addition of operation mode in the CPU 310 under the control of the process management section 1311.

A firmware download instructing section 1316 instructs the firmware download from the server 100 (see Fig. 32) under the control of the process management section 1311

An operation of the sixth example is explained below with reference to flowcharts shown in Figs. 4 to 8 and 35. The CPU 310 determines whether the normal command is input at step SA1 shown in Fig. 4, and in this case, the determined result is supposed to be "No".

The CPU 310 determines whether the operation mode adding command is input at step SA2, and in this case, the determined result is supposed to be "No". The CPU 310 determines whether the firmware download command is input at step SA3. In this case, the determined result is supposed to be "No", and the determinations at steps SA1 to SA3 are repeated.

When the normal command is input, the CPU 310 sets the determined result at step SA1 to "Yes". The CPU 310 executes the normal command executing process (see Fig. 5) at step SA4 similarly to the first embodiment.

When the operation mode (for example, the operation mode 0) is added, the shell process 1312 of the operating system 1310 shown in Fig. 34 instructs the process management section 1311 to start up the process at step ST1 shown in Fig. 35.

The process management section 1311 instructs the file system 1314 to read the operation mode file 13210 related with the operation mode 0 to be added from the operation mode file storage section 1320 shown in Fig. 33 at step ST2.

The file system 1314 reads the operation mode file 13210 from the operation mode file storage section 1320 at step ST3. The process management section 1311 instructs the operation mode addition instructing section 1315 to add the operation mode 0 at step ST4. The operation mode addition instructing section 1315 issues the operation mode adding command as the operation mode instructing process to the CPU 310 at step ST5.

When the operation mode adding command is input, the CPU 310 sets the determined result at step SA2 shown in Fig. 4 to "Yes". The CPU 310 executes the operation mode adding process at step SA5.

Concretely, the command input section 311 (see Fig. 34) fetches the operation mode adding command input via the command bus to the command usable/unusable determining section 314 and the command executing section 315 at step SC1 shown in Fig. 6.

The operation mode retaining section 312 posts the operation mode set at this time (in this case, the operation mode 1) to the usable command retaining section 313 at step SC2.

The usable command retaining section 313 posts the usable command group related with the posted operation mode 1 to the command usable/unusable determining section 314 at step SC3.

The command usable/unusable determining section 314 determines whether the operation mode adding command fetched at step SC1 is usable in the operation mode at step SC4. In this case, a determined result is supposed to be "Yes".

The command executing section 315 acquires the firmware related with the operation mode adding command (usable command) fetched at step SC1 from the firmware retaining section 316 at step SC5.

The command executing section 315 acquires the operation mode data and the command group from the data input/output section 317 at step SC6. In this case, the operation mode data are "0" (see

Fig. 3) related with the operation mode to be added. The command group includes the command 1 (0x01) to the command n (0xf8) related with the operation mode 0 shown in Fig. 3.

The command executing section 315 sets the operation mode 0 to be added into the operation mode retaining section 312 at step SC7, and sets the command group related with the operation mode 0 into the usable command retaining section 313. As a result, the command group is usable in the operation mode 0.

With reference to Fig. 35, the processing management section 1311 instructs the file system 1314 to read the operation mode file 13210 related with the added operation mode 0 from the operation mode file storage section 1320 shown in Fig. 33 at step ST6.

The file system 1314 reads the operation mode file 13210 shown in Fig. 33 from the operation mode file storage section 1320 at step ST7. The process management section 1311 sends the command/firmware number data 13240 of the operation mode file 13210 to the firmware download instructing section 1316 and instructs the download at step ST8.

As a result, the firmware download instructing section 1316 issues the firmware download command to the CPU 310, and outputs the command/firmware number data 13240 to the data input/output section 317.

When the firmware download command is input, the CPU 310 sets the determined result at step SA3 shown in Fig. 4 to "Yes". The CPU 310 executes the firmware download process at step SA6.

Concretely, the command input section 311 (see Fig. 34) fetches the firmware download command input via the command bus to the command usable/unusable determining section 314 and the command executing section 315 at step SD1 shown in Fig. 7. The operation mode retaining section 312 posts the operation mode set at this time to the usable command retaining section 313 at step SD2.

The usable command retaining section 313 posts the usable command group related with the posted operation mode to the command usable/unusable determining section 314 at step SD3.

The command usable/unusable determining section 314 determines whether the firmware download command fetched at step SD1 is usable in the operation mode at step SD4. Concretely, the command usable/unusable determining section 314 determines whether the usable command group posted at step SD3 includes the firmware download command fetched at step SD1. In this case, a determined result is supposed to be "Yes".

The command executing section 315 acquires the firmware for execution related with the firmware download command (usable command) fetched at step SD1 from the firmware retaining section 316 at step SD5.

The command executing section 315 acquires the firmware for setting from the download section 330 via the data input/output section 317 and the data bus based on the firmware download command and the related firmware for execution at step SD6.

Concretely, the command executing section 315 outputs the command/firmware number data 13240 (see Fig. 33) to the download section 330 shown in Fig. 32, and sends the download request to it. As a result, the download section 330 sets the determined result at step SE1 shown in Fig. 8 to "Yes".

The download section 330 specifies the firmware number related with the requested firmware based on the command/firmware number data 13240 at step SE2. The download section 330 requests the server 100 to download the firmware via the Internet 200 based on the firmware number.

As a result, the CPU 110 of the server 100 reads the firmware from the firmware storage section 130 using the firmware number as a key at step SE3. The CPU 110 transmits the firmware to the download section 330 of the client 1300. In the sixth embodiment, the step SE4 is skipped.

The command executing section 315 shown in Fig. 34 acquires the firmware for setting from the download section 330.

With reference to Fig. 7, the command executing section 315 sets the firmware for setting in the firmware retaining section 316 at step SD7. As a result, the command group is usable in the operation mode added by the operation mode adding process.

As explained above, according to the sixth example, the same effect as that in the first example is produced.

### (Seventh Example)

The sixth example explains a constitutional example that the operating system on the outside of the CPU 310 (see Fig. 32) instructs the addition of operation mode and the firmware download. The operating system may, however, instruct deletion of operation mode and firmware unload. This constitutional example is explained below as the seventh embodiment.

Fig. 36 is a block diagram illustrating a constitution according to the seventh example. In this drawing, like parts corresponding to those in Fig. 32 are designated by like reference numbers. A client 1400 shown in Fig. 36 is connected to the Internet 200. The client 1400 has a function for downloading firmware from the server 100 via the Internet 200, a function for unloading firmware, and a function for executing various commands using firmware and outputting results.

In the client 1400, an operating system 1420 instructs the addition of operation mode, the deletion of operation mode, the firmware download, and the firmware unload.

In the seventh example, the download section 330 shown in Fig. 36 does not issue the firmware download command but has only the download function. The firmware download command is issued by the operating system 1420.

Fig. 37 is a block diagram illustrating constitutions of the operating system 1420 and a CPU 1410 shown in Fig. 36. In the drawing, like parts corresponding to those in Fig. 34 are designated by like reference numerals, and the explanation thereof is omitted.

In the operating system 1420 shown in Fig. 37, the process management section 1421 manages a first process 1422 and a second process 1423. A save memory 1424 temporarily saves various data under the control of the process management section 1421.

An operation mode addition/deletion instructing section 1425 instructs addition and deletion of operation mode in the CPU 1410 under the control of the process management section 1421. A firmware download/unload instructing section 1426 instructs the firmware download from the server 100 (see Fig. 36) and the unloading of the firmware set in the firmware retaining section 316 under the control of the process management section 1421.

A context data load/unload instructing section 1427 instructs load and unload of context data (a value of a register (not shown) in the CPU 1410).

An operation of the seventh example is explained below with reference to flowcharts shown in Figs. 38 to 41. The CPU 1410 determines whether the normal command is input at step SU 1 shown in Fig. 38, and in this case, a determined result is supposed to be "No".

The CPU 1410 determines whether the operation mode adding command is input at step SU2, and in this case, a determined result is supposed to be "No". The CPU 1410 determines whether the firmware download command is input at step SU3, and in this case, a determined result is supposed to be "No".

The CPU 1410 determines whether an operation mode deleting command is input at step SU 4, and in this case, a determined result is supposed to be "No". The operation mode deleting command is for deleting the operation mode set in the operation mode retaining section 312 (see Fig. 37).

The CPU 1410 determines whether the firmware unload command is input at step SU5, and in this case, a determined result is supposed to be "No". The firmware unload command is for unloading the firmware set in the firmware retaining section 316. Thereafter, the CPU 1410 repeats the determinations at steps SU1 to SU5.

When the normal command is input, the CPU 1410 sets the determined result at step SU1 to "Yes". The CPU 1410 executes the normal command executing process (see Fig. 5) at step SU6 similarly to the first embodiment.

When the operation mode (for example, the operation mode 0) is added and the operation mode (for example, the operation mode 1) is deleted here, the process management section 1421 of the operating system 1420 shown in Fig. 37 instructs the context data load/unload instructing section 1427 to unload context data of the first process 1422 at step SX1 shown in Fig. 41.

The context data load/unload instructing section 1427 unloads the context data of the first process 1422 from the CPU 1410 at step SX2, and saves them in the save memory 1424 via the process management section 1421.

The process management section 1421 instructs the firmware download/unload instructing section 1426 to unload firmware related with the operation mode (operation mode 1) of the first process 1422 at step SX3. The firmware download/unload instructing section 1426 issues the firmware unload command to the CPU 1410 at step SX4.

When the firmware unload command is input, the CPU 1410 sets the determined result at step SU5 shown in Fig. 38 to "Yes". The CPU 1410 executes the firmware unload process at step SU10.

Concretely, the command input section 311 (see Fig. 37) fetches the firmware unload command input via the command bus to the command usable/unusable determining section 314 and the command executing section 1411 at step SW1 shown in Fig. 40. The operation mode retaining section 312 posts the operation mode 1 set at this time to the usable command retaining section 313 at step SW2.

The usable command retaining section 313 posts the usable command groups related with the posted operation mode to the command usable/unusable determining section 314 at step SW3.

The command usable/unusable determining section 314 determines whether the firmware unload command fetched at step SW1 is usable in the operation mode at step SW4. When the determined result is "No", the command usable/unusable determining section 314 processes this command as improper authority or undefined command exceptional interruption occurrence (error) at step SW7.

In this case, when the determined result at step SW4 is "Yes", the command executing section 1411 acquires the firmware for execution related with the firmware unload command (usable command) fetched at step SW1 from the firmware retaining section 316 at step SW5.

The command executing section 1411 unloads the firmware related with the firmware unload command from the firmware retaining section 316 based on the firmware unload command and the related firmware for execution at step SW6. The command executing section 1411 outputs the firmware to the firmware download/unload instructing section 1426 via the data input/output section 317.

With reference to Fig. 41, the firmware download/unload instructing section 1426 saves the unloaded firmware to the save memory 1424 via the process management section 1421 at step SX5. The process management section 1421 instructs the operation mode addition/deletion instructing section 1425 to delete the operation mode 1 of the first process 1422 at step SX6. The operation mode addition/deletion instructing section 1425 issues the operation mode deleting command for deleting the operation mode 1 to the CPU 1410 at step SX7.

When the operation mode deleting command is input, the CPU 1410 sets the determined result at step SU4 shown in Fig. 38 to "Yes". The CPU 1410 executes the operation mode deleting process at step SU9.

Concretely, the command input section 311 (see Fig. 37) fetches the operation mode deleting command input via the command bus to the command usable/unusable determining section 314 and the command executing section 1411 at step SV1 shown in Fig. 39.

The operation mode retaining section 312 posts the operation mode set at this time to the usable command retaining section 313 at step SV2.

The usable command retaining section 313 posts the usable command group related with the posted operation mode to the command usable/unusable determining section 314 at step SV3.

The command usable/unusable determining section 314 determines whether the operation mode deleting command fetched at step SV1 is usable in the operation mode at step SV4. When the determined result is "No", the command usable/unusable determining section 314 processes the command as improper authority or undefined command interruption occurrence (error) at step SV7.

In this case, when the determined result at step SV4 is "Yes", the command executing section 1411 acquires the firmware related with the operation mode deleting command (usable command) fetched at step SV1 from the firmware retaining section 316 at step SV5.

The command executing section 1411 deletes the operation mode instructed by the operation mode addition/deletion instructing section 1425 from the operation modes set in the operation mode retaining section 312 at step SV6.

With reference to Fig. 41, the process management section 1421 instructs the operation mode addition/deletion instructing section 1425 to add the operation mode 0 of the second process 1423 at step SX8. The operation mode addition/deletion instructing section 1425 issues the operation mode adding command for adding the operation mode 0 to the CPU 1410 at step SX9.

When the operation mode adding command is input, the CPU 1410 sets the determined result at step SU2 shown in Fig. 38 to "Yes". The CPU 1410 executes the operation mode adding process (see Fig. 6) at step SU7 similarly to the first embodiment. As a result, the operation mode 0 is added to the operation mode retaining section 312.

With reference to Fig. 41, the process management section 1421 instructs the firmware download/unload instructing section 1426 to download the firmware related with the operation mode (operation mode 0) of the second process 1423 at step SX10. The firmware download/unload instructing section 1426 issues the firmware download command to the CPU 1410 at step SX11.

When the firmware download command is input, the CPU 1410 sets the determined result at step SU3 shown in Fig. 38 to "Yes". The CPU 1410 executes the firmware download process (see Fig. 7) at step SU8 similarly to the first example. As a result, the firmware related with the operation mode 0 is set in the firmware retaining section 316.

With reference to Fig. 41, the process management section 1421 of the operating system 1420 shown in Fig. 37 instructs the context data load/unload instructing section 1427 to load the context data of the second process 1423 at step SX12. The context data load/unload instructing section 1427 loads the context data of the second process 1423 to the CPU 1410 at step SX13.

As explained above, according to the seventh example, the dynamically specified operation mode of the plural operation modes is deleted from the operation mode retaining section 312 (see Fig. 37). Further, the firmware related with the deleted operation mode is deleted from the firmware retaining section 316. For this reason, the limited resources of the CPU 1410 can be used effectively.

### (Eighth Example)

The first example explains the example that in the case of undefined command exceptional interruption occurrence (error) at step SB9 (see Fig. 5), step SC8 (see Fig. 6) or step SD8 (see Fig. 7), the normal command executing process, the operation mode adding process or the firmware download process are interrupted. An emulating section which emulates various processes in the CPU 310 (see Fig. 2) may be provided on the outside of the CPU 310. This constitutional example is explained below as the eighth example.

Fig. 42 is a block diagram illustrating a constitution according to the eight example. In this drawing, like parts corresponding to those in Fig. 1 are designated by like reference numerals, and the explanation thereof is omitted.

A client 1500 is connected to the Internet 200. The client 1500 has a function for downloading firmware from the server 100 via the Internet 200, a function for executing various commands using the firmware and outputting results, and an emulating function.

In the client 1500, a CPU 1510 controls the dynamic download of firmware, and sets operation modes and command groups, mentioned later. When undefined command exceptional interruption (error) occurs in the CPU 1510, an emulating section 1520 emulates the normal command executing process, the operation mode adding process or the firmware download process.

Fig. 43 is a block diagram illustrating constitutions of the CPU 1510 and the emulating section 1520 shown in Fig. 42. In this drawing, like parts corresponding to those in Fig .2 are designated by like reference numerals, and the explanation thereof is omitted.

The command executing section 1511 acquires firmware to be used for executing a command determined as usable by the command usable/unusable determining section 314 from the firmware retaining section 316 so as to execute the command. Further, when undefined command exceptional interruption (error) occurs at the time of executing the command, the command executing section 1511 jumps to an address of the emulating section 1520. The command executing section 1511 makes the emulate section 1520 emulate the process related with the command.

In the emulating section 1520, a control section 1521 controls the respective sections. An operation mode retaining section 1522 has the same function as that of the operation mode retaining section 312 so as to retain operation modes. A usable command retaining section 1523 has the same function as that of the usable command retaining section 313 so as to retain usable commands related with the operation modes set in the operation mode retaining section 1522.

A jump destination address storage section 1524 stores jump destination addresses in the case of undefined command exceptional interruption occurrence (error) therein. An unknown command interrupt handler 1525 has the same function as that of the command executing section 1511 so as to emulate a process in the command executing section 1511 in the case of undefined command exceptional interruption occurrence (error).

An operation of the eighth example is explained below with reference to flowcharts shown in Figs. 5 to 7 and 44.

The command executing section 1511 determines whether undefined command exceptional interruption (error) occurs in the normal command executing process, the operation mode adding process or the firmware download process shown in Fig. 5, 6 or 7 at step SY1 shown in Fig. 44. In this case, a determined result is supposed to be "No", and the determination is repeated.

When undefined command exceptional interruption occurs at step SB9 shown in Fig. 5, for example, the command executing section 1511 sets the determined result at step SY1 shown in Fig. 44 to "Yes". The command executing section 1511 jumps to a jump destination address at step SY2, and posts the command (in this case, the normal command) and the operation mode to the undefined command interrupt handler 1525. The undefined command interrupt handler 1525 starts execution of the undefined command interrupt handler at step SY3.

The undefined command interrupt handler 1525 determines a type of the command posted by the command executing section 1511 at step SY4. The undefined command interrupt handler 1525 determines whether the command (in this case, the normal command) is usable at step SY5.

Concretely, the undefined command interrupt handler 1525 acquires the usable command group related with the operation mode posted by the command executing section 1511 from the usable command retaining section 1523. The undefined command interrupt handler 1525 determines whether the usable command group includes the command (in this case, the normal command), and in this case, a determined result is supposed to be "Yes".

The undefined command interrupt handler 1525 executes the emulating process for emulating the execution of the command (in this case, the normal command) at step SY6. Concretely, the undefined command interrupt handler 1525 acquires the firmware related with the command (in this case, the normal command) from the firmware retaining section 316.

After the undefined command interrupt 1525 acquires data to be used for executing the command from the data bus, it executes the normal command using the firmware and the data. The undefined command interrupt handler 1525 outputs a result of executing the normal command to the data bus.

On the other hand, when the determined result at step SY5 is "No", the undefined command interrupt handler 1525 posts improper authority exceptional interruption to the command executing section 1511 at step SY7.

As explained above, according to the eighth example, when the undefined command exceptional interruption (error) occurs in the command related with the operation mode retained in the operation mode retaining section 312 (see Fig. 43), the emulating section 1520 is requested to execute the command. For this reason, reliability of the command execution can be heightened.

Modifications of the design which are within the scope of the present invention are included in the present invention.

For example, in the first to eighth examples, programs for realizing the various functions are recorded into a recording medium 1700 readable by a computer shown in Fig. 45. The programs recorded into the recording medium 1700 are read by the computer 1600 in Fig. 45, and are executed so as to realize the functions.

The computer 1600 shown in Fig. 45 is composed of a CPU 1610 for executing the programs, an input device 1620 such as a keyboard and a mouse, a ROM 1630 for storing various data, a RAM 1640 for storing operation parameters or the like, a reading device 1650 for reading the programs from the recording medium 1700, an output device 1660 such as a display or a printer, and a bus 1670 for connecting the respective sections.

The CPU 1610 reads the programs recorded in the recording medium 1700 via the reading device 1650, and executes the programs so as to realize the functions. The recording medium 1700 includes portable recording media such as an optical disc, a flexible disc and a hard disc, and also transmission media such as a network for temporarily recording data therein.

In the first to the eighth examples the respective characteristics may be combined.

As explained above, according an example, a dynamically specified operation mode in the plural operation modes is added into an operation mode retaining unit, and a command related with the added operation mode is set in a usable command retaining unit. Further, firmware to be used for executing the command is acquired from the outside. For this reason, while the security is being maintained, the extensibility can be improved, and the cost can be reduced.

According to an example, after an encrypted firmware is acquired from the outside, the firmware is decrypted. For this reason, the security during the acquiring of the firmware can be strengthened.

According to an example, after firmware with digital signature is acquired form the outside, the firmware is authenticated. For this reason, interpolation or the like during the acquiring of the firmware can be prevented.

According to the present invention, the access to the various resources to be used for executing the command is controlled according to the operation modes. For this reason, the resources can be dynamically allocated according to the operation modes.

According to an example, only when the number of the command of the dynamically specified operation modes is larger than the number of the commands of the operation modes already retained in the operation mode retaining unit, the dynamically specified operation mode is added into the operation mode retaining unit. For this reason, an operation mode can be added under more strict condition, and thus the security can be further strengthened.

According to an example, a dynamically specified operation mode in the plural operation modes is deleted from the operation mode retaining unit, and the firmware related with the deleted operation mode is deleted. For this reason, the limited resources in the central processing unit can be used effectively.

According to an example, when an error occurs in the command related with the operation mode retained in the operation mode retaining unit, the external emulator is requested to execute the command. For this reason, the reliability of the command execution can be improved.

According to an example, a dynamically specified operation mode in the plural operation modes is added into the operation mode retaining unit, and a command related with the added operation mode is set in the usable command retaining unit. Further, logic circuit data, which is related with an operation mode retained in the operation mode retaining unit and is for generating a logic circuit to be used for executing the command, are acquired from the outside. For this reason, while the security is being maintained, the extensibility can be improved, and the cost can be reduced.

According to an example, when a command is executed, the logic circuit is dynamically generated based on the logic circuit data related with the command. For this reason, while the security is being maintained, the extensibility can be improved, and the cost can be reduced.

### INDUSTRIAL APPLICABILITY

As explained above, the central processing unit and the operation program of the present invention are useful to a server and a client which provide the security functions such as encryption/decryption and digital signature.

## Claims

1. A central processing unit (1110) comprising:
an input unit (311) that inputs a command that can be executed by using a firmware or a logic circuit:
a storing unit (312) that stores a plurality of operation modes, each one of the operation modes corresponding to a different set of commands; and
a determining unit (313; 314) that determines whether the input command is included or not in the set of commands corresponding to a current operation mode,
**characterized by** further comprising:
a resource storing unit (1113₁, 1113₂, 1113₃, 1113₄) that stores a different set of resources required for executing the commands that are available when the each one of the operation modes is set;
an access control unit (1112) that, when the input command is included in the set of commands corresponding to the current operation mode, determines whether a necessary resource to execute the input command is included or not in an available set of resources corresponding to the current operation mode, and that prohibits access to the necessary resource that is not included in the available set of resources; and
an execution unit (1111) that, when the necessary resource is included in the available set of resources, executes the input command by using the firmware or the logic circuit in conjunction with the necessary resource.

2. The central processing unit according to claim 1, wherein
the input unit inputs an operation mode adding command for storing a new operation mode in the storing unit, and
the execution unit makes the storing unit store the new operation mode, when the operation mode adding command is included in the set of commands and corresponding to the current operation mode.

3. The central processing unit according to claim 2, wherein the execution unit makes the storing unit store the new operation mode, only when a number of commands corresponding to the new operation mode is greater than a number of commands corresponding to any one of the operation modes stores in the storing unit.

4. The central processing unit according to claim 1, wherein
the input unit inputs an firmware acquiring command for acquiring a new firmware that is used to execute a command, and
the execution unit acquires the new firmware from outside, when the firmware acquiring command is included in the set of commands corresponding to the current operation mode.

5. The central processing unit according to claim 4, wherein the execution unit acquires an encrypted firmware and decrypts the encrypted firmware.

6. The central processing unit according to claim 4, wherein the execution unit acquires a digitally signed firmware and authenticates the firmware.

7. The central processing unit according to claim 1, further comprising:
an operation mode deleting unit (1425, 1411) that deletes a specified operation mode from the storing unit; and
a firmware deleting unit (1426, 1411) that deletes a firmware corresponding to the operation mode deleted.

8. The central processing unit according to claim 1, further comprising an execution request unit (1511) that requests an external emulator to execute the input command, when command exception interrupt occurs in the CPU (1510).

9. The central processing unit according to claim 1, wherein
the input unit inputs a logic circuit data acquiring command for acquiring a logic circuit data to generate a new logic circuit that is used to execute a command, and
the execution unit acquires the logic circuit data from outside, when the logic circuit data acquiring command is included in the set of commands corresponding to the current operation mode, and generates the new logic circuit based on the logic circuit data acquired.

10. A method for managing a plurality of operation modes comprising:
inputting a command that can be executed by using a firmware or a logic circuit: and
determining whether the input command is included or not in a set of commands corresponding to a current operation mode, where each one of the operation modes corresponds to a different set of commands,
**characterized by**
the each one of the operation modes corresponding to a different set of resources required for executing the commands that are available when the each one of the operation modes is set, and further comprising:
determining whether a necessary resource to execute the input command is included or not in an available set of resources corresponding to the current operation mode, when the input command is included in the set of commands corresponding to the current operation mode;
prohibiting access to the necessary resource that is not included in the available set of resources; and
executing the input command by using the firmware or the logic circuit in conjunction with the necessary resource, when the necessary resource is included in the available set of resources.

11. A computer-readable recording medium that stores a computer program for managing a plurality of operation modes, the computer program makes a computer execute:
inputting a command that can be executed by using a firmware or a logic circuit; and
determining whether the input command is included or not in a set of commands corresponding to a current operation mode, where each one of the operation modes corresponds to a different set of commands,
**characterized by**
the each one of the operation modes corresponding to a different set of resources required for executing the commands that are available when the each one of the operation modes is set, and further comprising:
determining whether a necessary resource to execute the input command is included or not in an available set of resources corresponding to the current operation mode, when the input command is included in the set of commands corresponding to the current operation mode;
prohibiting access to the necessary resource that is not included in the available set of resources; and
executing the input command by using the firmware or the logic circuit in conjunction with the necessary resource, when the necessary resource is included in the available set of resources.

## Patentansprüche

1. Zentrale Verarbeitungseinheit (1110) mit:
einer Eingabeeinheit (311), die einen Befehl eingibt, der unter Verwendung von Firmware oder einer Logikschaltung ausgeführt werden kann;
einer Speichereinheit (312), die eine Vielzahl von Operationsmodi speichert, wobei jeder der Operationsmodi einem verschiedenen Satz von Befehlen entspricht; und
einer Bestimmungseinheit (313; 314), die bestimmt, ob der Eingabebefehl in dem Satz von Befehlen enthalten ist oder nicht, der einem gegenwärtigen Operationsmodus entspricht,
**dadurch gekennzeichnet, dass** sie ferner umfasst:
eine Ressourcenspeichereinheit (1113₁, 1113₂, 1113₃, 1113₄), die einen verschiedenen Satz von Ressourcen speichert, der zum Ausführen der Befehle erforderlich ist, die verfügbar sind, wenn ein jeweiliger der Operationsmodi eingestellt ist;
eine Zugriffssteuereinheit (1112), die bestimmt, wenn der Eingabebefehl in dem Satz von Befehlen enthalten ist, der dem gegenwärtigen Operationsmodus entspricht, ob eine erforderliche Ressource zum Ausführen des Eingabebefehls in einem verfügbaren Satz von Ressourcen enthalten ist oder nicht, der dem gegenwärtigen Operationsmodus entspricht, und die den Zugriff auf die erforderliche Ressource verhindert, die nicht in dem verfügbaren Satz von Ressourcen enthalten ist; und
eine Ausführungseinheit (1111), die dann, wenn die erforderliche Ressource in dem verfügbaren Satz von Ressourcen enthalten ist, den Eingabebefehl unter Verwendung der Firmware oder der Logikschaltung in Verbindung mit der erforderlichen Ressource ausführt.

2. Zentrale Verarbeitungseinheit nach Anspruch 1, bei der
die Eingabeeinheit einen Operationsmodushinzufügungsbefehl zum Speichern eines neuen Operationsmodus in der Speichereinheit eingibt und
die Ausführungseinheit bewirkt, dass die Speichereinheit den neuen Operationsmodus speichert, wenn der Operationsmodushinzufügungsbefehl in dem Satz von Befehlen enthalten ist, der dem gegenwärtigen Operationsmodus entspricht.

3. Zentrale Verarbeitungseinheit nach Anspruch 2, bei der die Ausführungseinheit bewirkt, dass die Speichereinheit den neuen Operationsmodus nur speichert, wenn eine Anzahl von Befehlen, die dem neuen Operationsmodus entsprechen, größer ist als eine Anzahl von Befehlen, die einem der in der Speichereinheit gespeicherten Operationsmodi entsprechen.

4. Zentrale Verarbeitungseinheit nach Anspruch 1, bei der
die Eingabeeinheit einen Firmwareerfassungsbefehl zum Erfassen einer neuen Firmware eingibt, die verwendet wird, um einen Befehl auszuführen, und
die Ausführungseinheit die neue Firmware von außen erfasst, wenn der Firmwareerfassungsbefehl in dem Satz von Befehlen enthalten ist, der dem gegenwärtigen Operationsmodus entspricht.

5. Zentrale Verarbeitungseinheit nach Anspruch 4, bei der die Ausführungseinheit eine verschlüsselte Firmware erfasst und die verschlüsselte Firmware entschlüsselt.

6. Zentrale Verarbeitungseinheit nach Anspruch 4, bei der die Ausführungseinheit eine digital signierte Firmware erfasst und die Firmware authentifiziert.

7. Zentrale Verarbeitungseinheit nach Anspruch 1, ferner mit:
einer Operationsmoduslöscheinheit (1425, 1411), die einen spezifizierten Operationsmodus aus der Speichereinheit löscht; und
einer Firmwarelöscheinheit (1426, 1411), die eine Firmware löscht, die dem gelöschten Operationsmodus entspricht.

8. Zentrale Verarbeitungseinheit nach Anspruch 1, ferner mit einer Ausführungsaufforderungseinheit (1511), die einen externen Emulator auffordert, den Eingabebefehl auszuführen, wenn eine außergewöhnliche Befehlsunterbrechung in der CPU (1510) auftritt.

9. Zentrale Verarbeitungseinheit nach Anspruch 1, bei der
die Eingabeeinheit einen Logikschaltungsdatenerfassungsbefehl zum Erfassen von Logikschaltungsdaten eingibt, um eine neue Logikschaltung zu erzeugen, die verwendet wird, um einen Befehl auszuführen, und
die Ausführungseinheit die Logikschaltungsdaten von außen erfasst, wenn der Logikschaltungsdatenerfassungsbefehl in dem Satz von Befehlen enthalten ist, der dem gegenwärtigen Operationsmodus entspricht, und die neue Logikschaltung auf der Basis der erfassten Logikschaltungsdaten erzeugt.

10. Verfahren zum Verwalten einer Vielzahl von Operationsmodi, umfassend:
Eingeben eines Befehls, der unter Verwendung von Firmware oder einer Logikschaltung ausgeführt werden kann; und
Bestimmen, ob der Eingabebefehl in einem Satz von Befehlen enthalten ist oder nicht, der einem gegenwärtigen Operationsmodus entspricht, wobei ein jeder der Operationsmodi einem verschiedenen Satz von Befehlen entspricht,
**dadurch gekennzeichnet, dass**
ein jeder der Operationsmodi einem verschiedenen Satz von Ressourcen entspricht, der zum Ausführen der Befehle erforderlich ist, die verfügbar sind, wenn ein jeweiliger der Operationsmodi eingestellt ist, und es ferner umfasst:
Bestimmen, ob eine erforderliche Ressource zum Ausführen des Eingabebefehls in einem verfügbaren Satz von Ressourcen enthalten ist oder nicht, der dem gegenwärtigen Operationsmodus entspricht, wenn der Eingabebefehl in dem Satz von Befehlen enthalten ist, der dem gegenwärtigen Operationsmodus entspricht;
Verhindern des Zugriffs auf die erforderliche Ressource, die nicht in dem verfügbaren Satz von Ressourcen enthalten ist; und
Ausführen des Eingabebefehls unter Verwendung der Firmware oder der Logikschaltung in Verbindung mit der erforderlichen Ressource, wenn die erforderliche Ressource in dem verfügbaren Satz von Ressourcen enthalten ist.

11. Computerlesbares Aufzeichnungsmedium, das ein Computerprogramm zum Verwalten einer Vielzahl von Operationmodi speichert, welches Computerprogramm bewirkt, dass ein Computer ausführt:
Eingeben eines Befehls, der unter Verwendung von Firmware oder einer Logikschaltung ausgeführt werden kann; und
Bestimmen, ob der Eingabebefehl in einem Satz von Befehlen enthalten ist oder nicht, der einem gegenwärtigen Operationsmodus entspricht, wobei ein jeder der Operationsmodi einem verschiedenen Satz von Befehlen entspricht,
**dadurch gekennzeichnet, dass**
ein jeder der Operationsmodi einem verschiedenen Satz von Ressourcen entspricht, der zum Ausführen der Befehle erforderlich ist, die verfügbar sind, wenn ein jeweiliger der Operationsmodi eingestellt ist, und es ferner umfasst:
Bestimmen, ob eine erforderliche Ressource zum Ausführen des Eingabebefehls in einem verfügbaren Satz von Ressourcen enthalten ist oder nicht, der dem gegenwärtigen Operationsmodus entspricht, wenn der Eingabebefehl in dem Satz von Befehlen enthalten ist, der dem gegenwärtigen Operationsmodus entspricht;
Verhindern des Zugriffs auf die erforderliche Ressource, die nicht in dem verfügbaren Satz von Ressourcen enthalten ist; und
Ausführen des Eingabebefehls unter Verwendung der Firmware oder der Logikschaltung in Verbindung mit der erforderlichen Ressource, wenn die erforderliche Ressource in dem verfügbaren Satz von Ressourcen enthalten ist.

## Revendications

1. Unité centrale de traitement (1110) comprenant :
une unité d'entrée (311) qui entre une commande qui peut être exécutée en utilisant un micrologiciel ou un circuit logique ;
une unité de stockage (312) qui stocke une pluralité de modes d'opération, chacun des modes d'opération correspondant à un ensemble de commandes différent ; et
une unité de détermination (313 ; 314) qui détermine si la commande d'entrée est incluse ou non dans l'ensemble de commandes correspondant à un mode d'opération actuel,
**caractérisée par** le fait de comprendre en outre :
une unité de stockage de ressources (1113₁, 1113₂, 1113₃, 1113₄) qui stocke un ensemble de ressources différent requis pour exécuter les commandes qui sont disponibles lorsque chacun des modes d'opération est établi ;
une unité de contrôle d'accès (1112) qui, lorsque la commande d'entrée est incluse dans l'ensemble de commandes correspondant au mode d'opération actuel, détermine si une ressource nécessaire pour exécuter la commande d'entrée est incluse ou non dans un ensemble de ressources disponible correspondant au mode d'opération actuel, et qui interdit l'accès à la ressource nécessaire qui n'est pas incluse dans l'ensemble de ressources disponible ; et
une unité d'exécution (1111) qui, lorsque la ressource nécessaire est incluse dans l'ensemble de ressources disponible, exécute la commande d'entrée en utilisant le micrologiciel ou le circuit logique conjointement avec la ressource nécessaire.

2. Unité centrale de traitement selon la revendication 1, dans laquelle
l'unité d'entrée entre une commande d'ajout de mode d'opération pour stocker un nouveau mode d'opération dans l'unité de stockage, et
l'unité d'exécution amène l'unité de stockage à stocker le nouveau mode d'opération, lorsque la commande d'ajout de mode d'opération est incluse dans l'ensemble de commandes correspondant au mode d'opération actuel.

3. Unité centrale de traitement selon la revendication 2, dans laquelle l'unité d'exécution amène l'unité de stockage à stocker le nouveau mode d'opération, uniquement lorsqu'un nombre de commandes correspondant au nouveau mode d'opération est supérieur à un nombre de commandes correspondant à l'un quelconque des modes d'opération stockés dans l'unité de stockage.

4. Unité centrale de traitement selon la revendication 1, dans laquelle
l'unité d'entrée entre une commande d'acquisition de micrologiciel pour acquérir un nouveau micrologiciel qui est utilisé pour exécuter une commande, et
l'unité d'exécution acquiert le nouveau micrologiciel depuis l'extérieur, lorsque la commande d'acquisition de micrologiciel est incluse dans l'ensemble de commandes correspondant au mode d'opération actuel.

5. Unité centrale de traitement selon la revendication 4, dans laquelle l'unité d'exécution acquiert un micrologiciel chiffré et déchiffre le micrologiciel chiffré.

6. Unité centrale de traitement selon la revendication 4, dans laquelle l'unité d'exécution acquiert un micrologiciel signé numériquement et authentifie le micrologiciel.

7. Unité centrale de traitement selon la revendication 1, comprenant en outre:
une unité de suppression de mode d'opération (1425, 1411) qui supprime un mode d'opération spécifié de l'unité de stockage ; et
une unité de suppression de micrologiciel (1426, 1411) qui supprime un micrologiciel correspondant au mode d'opération supprimé.

8. Unité centrale de traitement selon la revendication 1, comprenant en outre une unité de demande d'exécution (1511) qui demande à un émulateur externe d'exécuter la commande d'entrée, lorsqu'une interruption d'exception de commande se produit dans la CPU (1510).

9. Unité centrale de traitement selon la revendication 1, dans laquelle
l'unité d'entrée entre une commande d'acquisition de données de circuit logique pour acquérir des données de circuit logique afin de générer un nouveau circuit logique qui est utilisé pour exécuter une commande, et
l'unité d'exécution acquiert les données de circuit logique depuis l'extérieur, lorsque la commande d'acquisition de données de circuit logique est incluse dans l'ensemble de commandes correspondant au mode d'opération actuel, et génère le nouveau circuit logique sur la base des données de circuit logique acquises.

10. Procédé pour gérer une pluralité de modes d'opération comprenant :
l'entrée d'une commande qui peut être exécutée en utilisant un micrologiciel ou un circuit logique ; et
la détermination de si la commande d'entrée est incluse ou non dans un ensemble de commandes correspondant à un mode d'opération actuel, où chacun des modes d'opération correspond à un ensemble de commandes différent,
**caractérisé par**
chacun des modes d'opération correspondant à un ensemble de ressources différent requis pour exécuter les commandes qui sont disponibles lorsque chacun des modes d'opération est établi, et comprenant en outre :
la détermination de si une ressource nécessaire pour exécuter la commande d'entrée est incluse ou non dans un ensemble de ressources disponible correspondant au mode d'opération actuel, lorsque la commande d'entrée est incluse dans l'ensemble de commandes correspondant au mode d'opération actuel ;
l'interdiction de l'accès à la ressource nécessaire qui n'est pas incluse dans l'ensemble de ressources disponible ; et
l'exécution de la commande d'entrée en utilisant le micrologiciel ou le circuit logique conjointement avec la ressource nécessaire, lorsque la ressource nécessaire est incluse dans l'ensemble de ressources disponible.

11. Support d'enregistrement lisible par ordinateur qui stocke un programme informatique pour gérer une pluralité de modes d'opération, le programme informatique amène un ordinateur à exécuter :
l'entrée d'une commande qui peut être exécutée en utilisant un micrologiciel ou un circuit logique ; et
la détermination de si la commande d'entrée est incluse ou non dans un ensemble de commandes correspondant à un mode d'opération actuel, où chacun des modes d'opération correspond à un ensemble de commandes différent,
**caractérisé par**
chacun des modes d'opération correspondant à un ensemble de ressources différent requis pour exécuter les commandes qui sont disponibles lorsque chacun des modes d'opération est établi, et comprenant en outre :
la détermination de si une ressource nécessaire pour exécuter la commande d'entrée est incluse ou non dans un ensemble de ressources disponible correspondant au mode d'opération actuel, lorsque la commande d'entrée est incluse dans l'ensemble de commandes correspondant au mode d'opération actuel ;
l'interdiction de l'accès à la ressource nécessaire qui n'est pas incluse dans l'ensemble de ressources disponible ; et
l'exécution de la commande d'entrée en utilisant le micrologiciel ou le circuit logique conjointement avec la ressource nécessaire, lorsque la ressource nécessaire est incluse dans l'ensemble de ressources disponible.
